# EUROPEAN PATENT APPLICATION

(11) **EP 4 276 949 A1**
(43) Date of publication of application: **15.11.2023**
(21) Application number: 22914126.2
(22) Date of filing: 08.12.2022
(51) Int. Cl.: H01M 4/38, H01M 4/583, H01M 10/0525

(54) **NEGATIVE ELECTRODE MATERIAL AND PREPARATION METHOD THEREFOR, AND LITHIUM ION BATTERY**

(30) Priority: 31.12.2021 CN 202111673916
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: CHEN, Xi, Shenzhen, Guangdong 518106 (CN); PANG, Chunlei, Shenzhen, Guangdong 518106 (CN); LIANG, Tengyu, Shenzhen, Guangdong 518106 (CN); REN, Jianguo, Shenzhen, Guangdong 518106 (CN); HE, Xueqin, Shenzhen, Guangdong 518106 (CN)
(74) Representative: Studio Torta S.p.A.
(86) International application number: PCT/CN2022/137453
(87) International publication number: WO 2023/124871

(57) **Abstract**

An anode material, a preparation method thereof, and application provided. The anode material includes an active substance, and a buffer layer and a carbon layer both on surface of the active substance, where the buffer layer is formed on surface of the active substance, and the carbon layer includes an amorphous carbon material on surface of the buffer layer, and a carbon nano-material extending in a direction toward and/or away from the buffer layer. In particle structure of the above anode material, the buffer layer has a certain toughness, which can effectively buffer volume expansion of the anode material. Meanwhile, the extension of the carbon nano-material also provides a certain buffer effect, which can further buffer volume expansion of the anode material, reduce stress among the anode material particles during charging and discharging process, thereby improving structure stability of the anode material, thereby improving cycling capacity retention of battery.

## Description

### CROSS-REFERENCE TO RELATED APPLICATIONS

The present disclosure claims the benefit of priority of Chinese Patent Application No. 202111673916X, filed on December 31, 2021 and titled as "ANODE MATERIAL, PREPARATION METHOD THEREOF, AND APPLICATION", the entire contents of which are hereby incorporated by reference.

### TECHNICAL FIELD

The present disclosure relates to a field of lithium ion battery, and relates to an anode material, a preparation method thereof, and a lithium ion battery.

### BACKGROUND

With the continuous development of new energy technology, the application scope of lithium ion battery is becoming wider. The conventional anode carbon material has limited application due to its low theoretical specific capacity (372 mAh/g). Among non-carbon materials, Si-based material becomes more popular research object for anode material due to its high specific capacity (4200 mAh/g), suitable lithium intercalation potential (0 V to 0.3 V), and wide range of source. However, the conventional Si-based material has relatively serious volume expansion during intercalating and de-intercalating lithium, which may lead to collapse of material structure and peeling off of electrode material, further making a poor cycling capacity retention of battery.

### SUMMARY

In view of the above problems in the prior art, the present disclosure is to provide an anode material, a preparation method thereof, and a lithium ion battery. The anode material of the present disclosure can effectively buffer volume expansion of anode material, improve structure stability of anode material, and then improve cycling capacity retention of battery.

In order to achieve the above objects of the present disclosure, in a first aspect, the present disclosure provides an anode material. The anode material includes an active substance, and a buffer layer and a carbon layer both on surface of the active substance, where the buffer layer is formed on surface of the active substance, and the carbon layer includes an amorphous carbon material on surface of the buffer layer, and a carbon nano-material extending in a direction toward and/or away from the buffer layer.

In some embodiments, the carbon nano-material extends to the buffer layer in a direction toward the buffer layer.

In some embodiments, the carbon nano-material extends in a direction toward the buffer layer and through the buffer layer to the active substance.

In some embodiments, the carbon nano-material is connected to the amorphous carbon material and the buffer layer.

In some embodiments, the carbon nano-material extends through the buffer layer and is connected to the amorphous carbon material and the active substance.

In some embodiments, the carbon nano-material includes at least one of carbon nanotube, carbon nanofiber, and graphene.

In some embodiments, the carbon nano-material has at least one shape of a linear shape, a tubular shape, a sheet shape, and a strip shape.

In some embodiments, the carbon nano-material has a diameter of 1 nm to 100 nm.

In some embodiments, the carbon nano-material has an aspect ratio of ≥10.

In some embodiments, in the anode material, the carbon nano-material has a planar density of 20 pcs/mm² to 10000 pcs/mm².

In some embodiments, the buffer layer includes at least one of alkali metal halide, alkali metal nitrogen compound, alkali metal oxide, and transition metal oxide.

In some embodiments, the buffer layer includes at least one of LiF and Li₃N.

In some embodiments, the buffer layer includes at least one of Li₂O, Al₂O₃, TiO₂, ZnO, and ZrO₂.

In some embodiments, the buffer layer is capable of catalyzing the amorphous carbon material to form the carbon nano-material.

In some embodiments, the buffer layer is capable of catalyzing the amorphous carbon material to form in-situ the carbon nano-material.

In some embodiments, the buffer layer has a thickness of 0.01 µm to 2 µm.

In some embodiments, the buffer layer includes at least one of LiF, Li₂O, Li₃N, Al₂O₃, TiO₂, ZnO, and ZrO₂.

In some embodiments, the active substance includes a SiOₓ material, where 0<x<2.

In some embodiments, the active substance includes a SiOₓ material, where 0.8re ial.

In some embodiments, the active substance includes a SiOₓ material, and a particle of the SiOₓ material has spherical or spherical-like in shape.

In some embodiments, the active substance includes a SiOₓ material, and a particle of the SiOₓ material has a sphericity coefficient of ≥0.4.

In some embodiments, the buffer layer accounts for 0.05% to 20% by mass of the anode material.

In some embodiments, the carbon layer accounts for 0.5% to 20% by mass of the anode material.

In some embodiments, the carbon layer has a thickness of 10 nm to 1500 nm.

In some embodiments, the anode material has a D₅₀ of 1 µm to 20 µm.

In some embodiments, the anode material has a particle size distribution (D₉₀-D₅₀)/(D₅₀-D₁₀) of 1.2 to 1.6.

In some embodiments, the active substance includes a Si grain.

In some embodiments, the active substance includes a Si grain with a grain size of 2 nm to 10 nm.

In some embodiments, the anode material has a specific surface area of 1 m²/g to 20 m2/g.

In a second aspect, the present disclosure provides a preparation method of an anode material, including:
forming a buffer layer on surface of an active substance to obtain a solid composite, where the buffer layer includes at least one of alkali metal halide, alkali metal nitrogen compound, alkali metal oxide, and transition metal oxide; and
subjecting the solid composite to a carbon coating treatment in a protective atmosphere to obtain the anode material, where the anode material includes the active substance, and the buffer layer and a carbon layer both on surface of the active substance, the carbon layer includes an amorphous carbon material, and a carbon nano-material extending in a direction from the amorphous carbon material toward and/or away from the buffer layer.

In some embodiments, the active substance includes a SiOₓ material, where 0<x<2.

In some embodiments, the active substance includes a SiOₓ material, where 0.8re ial.

In some embodiments, the active substance includes a SiOₓ material, and a particle of the SiOₓ material has spherical or spherical-like in shape.

In some embodiments, the active substance includes a SiOₓ material, and a particle of the SiOₓ material has a sphericity coefficient of ≥0.4.

In some embodiments, the active substance includes a Si grain.

In some embodiments, the active substance includes a Si grain with a grain size of 2 nm to 10 nm.

In some embodiments, the buffer layer is capable of catalyzing the amorphous carbon material to form the carbon nano-material.

In some embodiments, the buffer layer is capable of catalyzing the amorphous carbon material to form in-situ the carbon nano-material.

In some embodiments, the buffer layer includes at least one of alkali metal halide, alkali metal nitrogen compound, alkali metal oxide, and transition metal oxide.

In some embodiments, the buffer layer includes at least one of LiF, NaF, and Li₃N.

In some embodiments, the buffer layer includes at least one of Li₂O, Al₂O₃, MgO, TiO₂, ZnO, CuO, Ag₂O, and ZrO₂.

In some embodiments, the buffer layer has a thickness of 0.01 µm to 2 µm.

In some embodiments, the buffer layer includes at least one of LiF, Li₂O, Li₃N, Al₂O₃, TiO₂, ZnO, and ZrO₂.

In some embodiments, a manner of forming a buffer layer on surface of an active substance is liquid phase coating.

In some embodiments, a step of forming a buffer layer on surface of an active substance to obtain a solid composite includes: mixing a buffer layer material and the active substance in a solvent to prepare a mixed slurry, and subjecting the mixed slurry to a solid-liquid separation treatment to obtain the solid composite.

In some embodiments, the buffer layer material in the mixed slurry has a particle size of 1 nm to 1 µm.

In some embodiments, the solvent includes at least one of water and ethanol.

In some embodiments, the buffer layer material accounts for 0.05% to 0.2% by mass of the mixed slurry.

In some embodiments, the active substance accounts for 2% to 20% by mass of the mixed slurry.

In some embodiments, the solid-liquid separation treatment includes at least one of suction filtration process, centrifugation process, and spray drying process.

In some embodiments, a step of forming a buffer layer on surface of an active substance to obtain a solid composite includes: mixing a precursor material of the buffer layer in a solvent to prepare a dispersion containing a buffer layer material; and adding the active substance to the dispersion for mixing, and subjecting to a solid-liquid separation treatment to obtain the solid composite.

In some embodiments, the precursor material of the buffer layer includes a lithium source and a fluorine source.

In some embodiments, the precursor material of the buffer layer includes a lithium source and a fluorine source, where the lithium source includes at least one of lithium nitrate, lithium acetate, lithium carbonate, and lithium oxalate.

In some embodiments, the precursor material of the buffer layer includes a lithium source and a fluorine source, where the fluorine source includes at least one of ammonium fluoride, sodium fluoride, and calcium fluoride.

In some embodiments, the precursor material of the buffer layer includes a lithium source and a fluorine source, where the lithium source accounts for 0.01% to 0.5% by mass of the dispersion, and the fluorine source accounts for 0.01% to 0.5% by mass of the dispersion.

In some embodiments, the method further includes: pre-heating the solid composite, and subjecting to a carbon coating treatment.

In some embodiments, the method further includes: pre-heating the solid composite with a pre-heated protective atmosphere, and subjecting to a carbon coating treatment.

In some embodiments, the method further includes: pre-heating the solid composite with a pre-heated protective atmosphere, and subjecting to a carbon coating treatment, where the protective atmosphere has a pre-heated temperature of 100°C to 300°C.

In some embodiments, the method further includes: pre-heating the solid composite with a pre-heated protective atmosphere, and subjecting to a carbon coating treatment, where the protective atmosphere has a temperature rise rate of 1°C/min to 50°C/min.

In some embodiments, the carbon coating treatment includes at least one of solid-phase carbon coating process, liquid-phase carbon coating process, and gas-phase carbon coating process.

In some embodiments, the carbon coating treatment includes: mixing the solid composite with a carbon source, and making a pyrolysis of the carbon source to form the carbon layer on particle surface of the solid composite.

In some embodiments, after subjecting the solid composite to a carbon coating treatment, the method further includes: subjecting the solid composite after carbon coating treatment to a heat treatment.

In some embodiments, the protective atmosphere includes at least one of nitrogen, argon, helium, neon, krypton, and xenon.

In some embodiments, the carbon source includes a gas-phase carbon source.

In some embodiments, the carbon source includes a gas-phase carbon source, where the gas-phase carbon source includes a gas-phase hydrocarbon carbon source.

In some embodiments, the carbon source includes a gas-phase carbon source, where the gas-phase carbon source includes at least one of methane, ethane, propane, ethylene, propylene, acetylene, propyne, acetone, and benzene.

In some embodiments, the carbon source includes a liquid-phase carbon source.

In some embodiments, the carbon source includes a liquid-phase carbon source, where the liquid-phase carbon source includes a liquid-phase organic carbon source.

In some embodiments, the carbon source includes a liquid-phase carbon source, where the liquid-phase carbon source includes at least one of n-hexane, toluene, benzene, xylene, methanol, ethanol, propanol, butanol, pentanol, acetone, butanone, 2-pentanone, methyl acetate, ethyl acetate, propyl acetate, butyl acetate, and amyl acetate.

In some embodiments, the carbon source includes a solid-phase carbon source.

In some embodiments, the carbon source includes a solid-phase carbon source, where the solid-phase carbon source includes a solid-phase organic carbon source.

In some embodiments, the carbon source includes a solid-phase carbon source, where the solid-phase carbon source includes at least one of citric acid, glucose, pitch, phenolic resin, and furfural resin.

In some embodiments, the pyrolysis has a temperature of 600°C to 1200°C.

In some embodiments, the pyrolysis has a temperature rise rate of 0.1°C/min to 10°C/min.

In some embodiments, the heat treatment has a temperature of 600°C to 1200°C.

In some embodiments, the heat treatment has a temperature rise rate of 1°C/min to 5°C/min.

In some embodiments, the heat treatment has a duration of 1 h to 48 h.

In some embodiments, the active substance includes a SiOₓ material, where 0<x<2. Before forming the buffer layer on surface of the active substance, the method further includes:
subjecting the SiOₓ material to a thermal disproportionation treatment.
In some embodiments, the thermal disproportionation treatment has a temperature of 800°C to 1400°C;
In some embodiments, the thermal disproportionation treatment has a temperature rise rate of 1°C/min to 5°C/min;

In some embodiments, the thermal disproportionation treatment has a duration of 2 h to 50 h.

In a third aspect, the present disclosure provides a lithium ion battery, including the above anode material, or the anode material prepared according to the above preparation method of the anode material.

In a fourth aspect, the present disclosure provides a rechargeable electronic product, including the above lithium ion battery.

Compared with the prior art, the present disclosure has the following beneficial effects:
The anode material provided by the present disclosure includes an active substance, and a buffer layer and a carbon layer both on surface of the active substance, where the buffer layer is formed on surface of the active substance, and the carbon layer includes an amorphous carbon material on surface of the buffer layer, and a carbon nano-material extending in a direction toward and/or away from the buffer layer.

In particle structure of the above anode material, the buffer layer has a certain toughness, which can effectively buffer volume expansion of the anode material. Meanwhile, the extension of the carbon nano-material also provides a certain buffer effect, which can further buffer volume expansion of the anode material, reduce stress among the anode material particles during charging and discharging process, thereby improving structure stability of the anode material, thereby improving cycling capacity retention of battery.

In addition, the carbon nano-material, on the one hand, can increase the conductivity of electrons and ions, and thus improve electrical conductivity, and on the other hand, can also effectively avoid and weaken adverse effect on electronic conductivity caused by electrical insulation of the buffer layer, which further enables the anode material to have a high ionic and electronic conductivity, further improving cycling capacity retention of battery.

In the above preparation method of the anode material, a buffer layer is formed on surface of the active substance to obtain a solid composite, and the solid composite is subjected to a carbon coating treatment to obtain the anode material. When the carbon layer is formed by the carbon coating treatment, with deposition of carbon atoms on surface of the buffer layer, the carbon nano-material is formed in-situ on surface of amorphous carbon material of the carbon layer under catalysis of metal compound in the buffer layer, which is beneficial to simplify process for preparing the anode material. Among them, the presence of carbon nano-material can not only improve ionic and electronic conductivity of the anode material, improve cycling capacity retention of battery, but also effectively buffer volume expansion of the anode material, such that the anode material can maintain a stable structure and performance. The preparation method in the present embodiments is simple and easy to implement, and facilitates for large-scale promotion.

### BRIEF DESCRIPTION OF DRAWINGS

FIG. 1 is a structure diagram of the anode material in an embodiment of the present disclosure;
FIG. 2 is a flow chart of a preparation method of the anode material in an embodiment of the present disclosure;
FIG. 3a and FIG. 3b are electron microscope photos of the anode material prepared by Example 1 of the present disclosure, respectively;
FIG. 4a and FIG. 4b are electron microscope photos of the anode material prepared by Example 2 of the present disclosure, respectively;
FIG. 5a is another electron microscope photo of nanowire in the anode material prepared by Example 2 of the present disclosure;
FIG. 5b is an EDS (Energy Dispersive Spectroscopy) energy spectrum of nanowires in the anode material prepared by Example 2 of the present disclosure;
FIG. 6a and FIG. 6b are electron microscope photos of the anode material prepared by Comparative Example 1 of the present disclosure, respectively;
FIG. 7 is a diagram of test results of cycling expansion of lithium ion batteries prepared by the anode materials of Example 1 and Comparative Example 1, where abscissa represents specific capacity (mAh/g), and ordinate represents voltage (V);
FIG. 8 is a diagram of test results of cycling capacity retention of lithium ion batteries prepared by the anode materials of Example 1 and Comparative Example 1, where abscissa represents cycling number (cycle), and ordinate represents representative capacity retention (%).

### DESCRIPTION OF EMBODIMENTS

In order to make the above objects, features and advantages of the present disclosure more obvious and understandable, the specific implementations of the present disclosure will be described in detail below. In the following description, numerous specific details are set forth in order to provide a thorough understanding of the present disclosure. However, the present disclosure can be implemented in many other ways different from those described here, and those skilled in the art can make similar improvements without departing from the connotation of the present disclosure, so the present disclosure is not limited by the specific embodiments disclosed below.

Unless otherwise defined, all technical and scientific terms adopted herein have the same meaning as commonly understood by one of ordinary skill in the technical field to which the present disclosure belongs. The terms adopted herein in the specification of the present disclosure are only for the purpose of describing specific embodiments, and are not intended to limit the present disclosure. As adopted herein, the term "and/or" includes any and all combinations of one or more of the associated listed items.

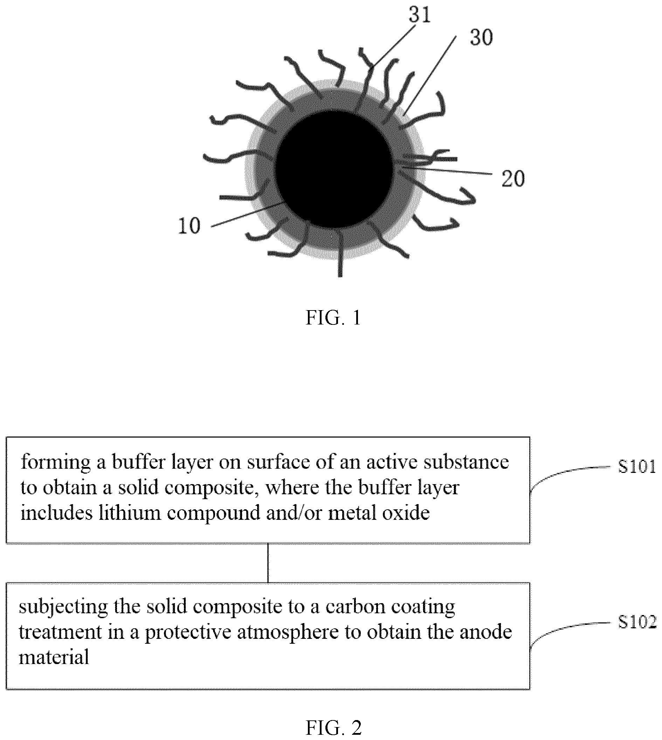

An embodiment of the present disclosure provides an anode material. As shown in FIG. 1, the anode material includes an active substance 10, and a buffer layer 20 and a carbon layer 30 both on surface of the active substance 10, where the buffer layer 20 is formed on surface of the active substance, and the carbon layer 30 includes an amorphous carbon material on surface of the buffer layer 20, and a carbon nano-material 31 extending in a direction toward and/or away from the buffer layer.

In particle structure of the anode material in the present embodiment, the buffer layer has a certain toughness, which can effectively buffer volume expansion of the anode material. Meanwhile, the extension of the carbon nano-material also provides a certain buffer effect, which can further buffer volume expansion of the anode material, reduce stress among the anode material particles during charging and discharging process, thereby improving structure stability of the anode material, thereby improving cycling capacity retention of battery.

In addition, the carbon nano-material, on the one hand, can increase the conductivity of electrons and ions, and thus improve electrical conductivity, and on the other hand, can also effectively avoid and weaken adverse effect on electronic conductivity caused by electrical insulation of the buffer layer, which further enables the anode material to have a high ionic and electronic conductivity, further improving cycling capacity retention of battery.

It can be understood that the carbon layer includes the amorphous carbon material on surface of the buffer layer, and a carbon nano-material extending in a direction toward and/or away from the buffer layer. Where, extending in a direction toward the buffer layer means that the carbon nano-material extends in a direction from the amorphous carbon material to close to the active substance, and extending in a direction away from the buffer layer means that the carbon nano-material extends in a direction from the amorphous carbon material to away from the active substance.

In a specific embodiment, the carbon nano-material extends to the buffer layer in a direction toward the buffer layer. At this time, the carbon nano-material can connect the amorphous carbon material and the buffer layer, which can increase 3D conductive network, improve conductivity, and increase cycling capacity retention of battery. It can be understood that when the carbon nano-material extends to the buffer layer in a direction toward the buffer layer, there may also be other carbon nano-material extending in a direction away from the buffer layer.

In another specific embodiment, the carbon nano-material extends in a direction toward the buffer layer and through the buffer layer to the active substance. At this time, the carbon nano-material can extend through the buffer layer and connect the amorphous carbon material and the active substance. That is, the carbon nano-material connects the amorphous carbon material, the buffer layer, and the active substance to form a double flexible coating layer structure, so as to better provide a buffer for expansion effect of the anode material. Meanwhile, since the carbon nano-material extends to surface of the active substance, a certain bonding force is generated between the double flexible coating layer structure, which can make the carbon layer, the buffer layer, and the active substance have a better binding force, which can further suppress volume expansion of the anode material, such that the anode material maintains a stable structure and performance. It can also be understood that when the carbon nano-material extends in a direction toward the buffer layer and through the buffer layer to the active substance, there may also be other carbon nano-material extending away from the buffer layer.

In a specific embodiment, the buffer layer is capable of catalyzing carbon material to form the carbon nano-material. Further, the buffer layer is capable of catalyzing the amorphous carbon material to form in-situ the carbon nano-material.

In a specific embodiment, the buffer layer has a thickness of 0.01 µm to 2 µm. Optionally, the buffer layer has a thickness of 0.01 µm, 0.015 µm, 0.03 µm, 0.05 µm, 0.08 µm, 0.1 µm, 0.2 µm, 0.3 µm, 0.4 µm, 0.5 µm, 0.6 µm, 0.7 µm, 0.8 µm, 0.9 µm, 1 µm, 1.2 µm, 1.5 µm, 1.8 µm, or 2 µm.

In a specific embodiment, the active substance includes a SiOₓ material, where 0<x<2. x can be 0.1, 0.2, 0.3, 0.4, 0.5, 0.6, 0.7, 0.8, 0.9, 1, 1.2, 1.3, 1.5, 1.6, 1.8, 1.99, etc., which are not limited herein.

In a specific embodiment, the active substance includes a SiOₓ material, where 0.8re ial, Optionally, x is 0.8, 0.9, 1, 1.1, 1.2, 1.3, 1.4, or 1.5, etc. Further, x=1. Preferably, the SiOₓ material is SiO. Still further, the SiOₓ material is a SiO particle.

In a specific embodiment, a particle of the SiOₓ material has spherical or spherical-like in shape.

In a specific embodiment, a particle of the SiOₓ material has a sphericity coefficient of e Si. Optionally, the sphericity coefficient of SiOₓ core particle is 0.4, 0.45, 0.5, 0.55, 0.6, 0.65, 0.7, 0.75, 0.8, 0.85, 0.9, 0.95, etc. Preferably, the sphericity coefficient of the SiOₓ core particle is e0.95.

In a specific embodiment, the carbon nano-material is formed in situ on surface of the amorphous carbon material. The carbon nano-materials formed in situ can provide better bonding force. When the carbon nano-material extends to the buffer layer or through the buffer layer to the active substance, a better bonding force can be formed between the carbon layer and the buffer layer, or among the carbon layer, the buffer layer, and the SiOₓ core, so as to further suppress expansion of the anode material, and maintain structural stability of the anode material.

In particle structure of the anode material of the present embodiment, the carbon nano-material has a stable extension environment, which can maintain a stable diameter during extension. When the carbon nano-material extends from the amorphous carbon material to the buffer layer in a direction toward the buffer layer, the carbon atoms closest to the buffer layer have dangling bonds, and there is a certain binding force between the buffer layer and the carbon atoms, which can balance with automatically closing force of the carbon atom dangling bond, so as to make opening connecting the carbon nano-material and the buffer layer exist stably, such that the carbon nano-material can have a constant diameter but an increased length as expending out, forming a carbon nano-material with a relatively large aspect ratio and a uniform diameter.

In a specific embodiment, the carbon nano-material has a diameter of 1 nm to 100 nm. Optionally, the carbon nano-material has a diameter of 5 nm, 10 nm, 15 nm, 20 nm, 30 nm, 40 nm, 50 nm, 60 nm, 70 nm, 80 nm, or 90 nm. Further, the carbon nano-material has an aspect ratio of isomateriaspect ratio of the carbon nano-materials is high, which is beneficial to extending to the buffer layer or through the buffer layer to the SiOₓ core, and is also beneficial to occur entanglement among different carbon nano-materials, which can facilitate buffer effect on volume expansion of the anode material, such as to improve structure stability of the anode material. As some examples of aspect ratio of the carbon nano-material, the aspect ratio of the carbon nano-material can be, but not limited to, 10, 11, 12, 13, 14, 15, etc.

In a specific embodiment, in the anode material, the carbon nano-material has a planar density of 20 pcs/mm² to 10000 pcs/mm². The carbon nano-material can provide a channel for movement of electrons. When the planar density of the carbon nano-materials is within this range, a large number of electrons and ions can be adsorbed on surface of the carbon nano-materials and gap between adjacent carbon nano-materials, such that higher discharge capacity and better cycling performance can be obtained. When the planar density of the carbon nano-material is too low, the movement channels of electrons will be reduced, which is especially unfavorable for high current charging and discharging. When the planar density of the carbon nano-material is too high, relative content of the active substance will be reduced correspondingly, which will reduce capacity of battery. In addition, when content of the carbon nano-material is too high, penetration capacity of electrolyte in the electrode material will be increased, resulting in an increase in side reaction of the electrolyte, and the thickness of SEI film may continue to increase, which is not beneficial to improvement of electrical performance of battery.

Optionally, the carbon nano-material has a planar density of 20 pcs/mm², 50 pcs/mm², 100 pcs/mm², 200 pcs/mm², 300 pcs/mm², 400 pcs/mm², 500 pcs/mm², 600 pcs/mm², 800 pcs/mm², 1000 pcs/mm², 2000 pcs/mm², 3000 pcs/mm², 4000 pcs/mm², 5000 pcs/mm², 6000 pcs/mm², 7000 pcs/mm², 8000 pcs/mm², 9000 pcs/mm², 10000 pcs/mm², 12000 pcs/mm², 15000 pcs/mm², 18000 pcs/mm², etc. Preferably, the carbon nano-material has a planar density of 20 pcs/mm² to 2000 pcs/mm².

In a specific embodiment, the carbon nano-material includes at least one of carbon nanowire, carbon nanotube, carbon nanofiber, and graphene.

In a specific embodiment, the carbon nano-material has at least one shape of a linear shape, a tubular shape, a sheet shape, and a strip shape.

In a specific embodiment, the buffer layer includes at least one of alkali metal halide, alkali metal nitrogen compound, alkali metal oxide, and transition metal oxide.

Specifically, the alkali metal halide includes at least one of LiF and NaF, and the alkali metal nitrogen compound includes at least one of Li₃N and KN₃.

The alkali metal oxide includes Li₂O and K₂O, and the transition metal oxide includes at least one of Al₂O₃, MgO, TiO₂, ZnO, CuO, Ag₂O, and ZrO₂.

At this time, the buffer layer can realize ion conduction, but the buffer layer can realize a function similar to an electronic insulating layer, reducing highly active electrons to pass through the buffer layer and react with electrolyte. The introduction of the buffer layer can be equivalent to introducing a layer of artificial SEI film (SEI film represents solid electrolyte interface film), which reduces consumption of lithium ions when the SEI film is formed during discharging, thereby reducing irreversible capacity of charging and discharging, and further improving cycling capacity retention of battery.

In a specific embodiment, the buffer layer accounts for 0.05% to 20% by mass of the anode material. If content of the buffer layer is too high, it is difficult for the carbon nano-materials to disperse, and a thicker buffer layer will have a certain negative effect on electronic conductivity and specific capacity. If content of the buffer layer is too low, it is difficult for the carbon nano-materials to be evenly attached, and amount of the carbon nano-materials is small, which has a small improvement in conductivity. And when the buffer layer is too small, it is difficult to form a complete and effective coating layer on surface of the SiOₓ core surface, thus it difficult to fully play role of the buffer layer. Optionally, a mass ratio of the buffer layer in the anode material can be 0.05%, 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5%, 5%, 5.5%, 6%, 6.5%, 7%, 8%, 9%, 10%, 11%, 12%, 13%, 14%, 15%, 16%, 17%, 18%, 19%, or 20%, etc. It can be understood that the mass ratio of the buffer layer in the anode material can also be other values in the range of 0.05% to 20%. Optionally, during preparation, the mass ratio of the buffer layer in the anode material can be controlled by amount of the buffer layer added.

In a specific embodiment, the carbon layer accounts for 0.5% to 20% by mass of the anode material. When proportion of the carbon layer is too large, it will lead to an excessive thickness of the carbon layer, which make transmission distance of lithium ions too long, and improvement of electrical performance is poor. Meanwhile, the carbon layer with too large thickness may bring about a problem of reduced tap density and compacted density, resulting in decreasing of specific capacity. When proportion of the carbon layer is too small, it will lead to an excessive small thickness of the carbon layer, which is difficult to completely and effectively coat inner buffer layer, increasing chance of contacting between the active material and electrolyte, bringing adverse effect on improvement of cycling performance of battery, and may also make it difficult for double flexible coating layer structure to play a better role.

Optionally, a mass ratio of the carbon layer in the anode material can be 0.5%, 0.6%, 0.7%, 0.8%, 0.9%, 1%, 1.5%, 2%, 2.5%, 3%, 3.5%, 4%, 4.5%, 5%, 5.5%, 6%, 6.5%, 7%, 8%, 9%, 10%, 11%, 12%, 13%, 14%, 15%, 16%, 17%, 18%, 19%, or 20% etc. It can be understood that the mass ratio of the carbon layer in the anode material can also be other values in the range of 0.5% to 20%. Preferably, the mass ratio of the carbon layer in the anode material is 1% to 10%. Optionally, during preparation, the mass ratio of the carbon layer in the anode material can be controlled by deposition amount of carbon source.

In a specific embodiment, the carbon layer has a thickness of 10 nm to 1500 nm. Specifically, it can be 10 nm, 20 nm, 50 nm, 80 nm, 100 nm, 200 nm, 500 nm, 800 nm, 1000 nm, 1500 nm, etc., which is not limited herein.

In a specific embodiment, the anode material has a D₅₀ of 1 µm to 20 µm. Optionally, the anode material has a D₅₀ of 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or 20 µm. It can be understood that the D₅₀ of the anode material can also be other values in the range of 1 µm to 20 µm. When the D₅₀ of the anode material is within this range, is particle size is appropriate, such that a high initial Coulomb efficiency can be obtained. When particle of the anode material is too small, the more the gap volume among the particles per unit volume, the smaller the volume ratio of the material, which easily leads to damage to compacted density. In addition, particle of the anode material is too small, specific surface area of the anode material in contact with electrolyte is too large, SEI film formed during initial charging and discharging consumes more charges, and irreversible capacity loss is large, which easily leads to a decrease in initial Coulomb efficiency. When particle of the anode material is too large, diffusion path of lithium ions will become larger, number of channel for lithium ion intercalation and de-intercalation will decrease, and van der Waals force that needs to be overcome during intercalation becomes large, such that it is difficult for intercalation of lithium ions, which is not beneficial to form a state of intercalated lithium, causing a reduction in initial discharging specific capacity.

Optionally, the anode material has a particle size distribution (D₉₀-D₅₀)/(D₅₀-D₁₀) of 1.2 to 1.6. For example, the value of (D₉₀-D₅₀)/(D₅₀-D₁₀) of the anode material can be, but not limited to, 1.2, 1.3, 1.4, 1.5, or 1.6, etc. When the anode material satisfies that (D₉₀-D₅₀)/(D₅₀-D₁₀) = 1.2 to 1.6, particle size of the anode material can involve a better normal distribution and a wider particle distribution, such that small particles in system can be filled to gaps among large particles, which facilitates to increase compaction density of the material and energy density of battery. In addition, particle size distribution is wide, and viscosity of slurry is low during coating, which are beneficial to increase solid content and reduce difficulty of coating.

In a specific embodiment, the active substance further includes a Si grain, and the Si grain of the anode material has a grain size of 2 nm to 10 nm. Optionally, the Si grain of the anode material has a grain size of 2 nm, 3 nm, 4 nm, 5 nm, 6 nm, 7 nm, 8 nm, 9 nm, or 10 nm. It can be understood that the Si grain of the anode material can also have a grain size of other values in the range of 2 nm to 10 nm.

In a specific embodiment, the anode material has a specific surface area of 1 m²/g to 20 m²/g. Optionally, the anode material has a specific surface area of 1 m²/g , 2 m²/g, 3 m²/g, 4 m²/g, 5 m²/g, 6 m²/g, 7 m²/g, 8 m²/g, 9 m²/g, 10 m²/g, 11 m²/g, 12 m²/g, 13 m²/g, 14 m²/g, 15 m²/g, 16 m²/g, 17 m²/g, 18 m²/g, 19 m²/g, or 20 m²/g. It can be understood that the anode material can also have a specific surface area of other values in the range of 1 m²/g to 20 m²/g.

Please refer to FIG. 2, another embodiment of the present disclosure provides a preparation method of the anode material. The preparation method of the anode material includes the following steps:
S101: forming a buffer layer on surface of an active substance to obtain a solid composite, where the buffer layer includes at least one of alkali metal halide, alkali metal nitrogen compound, alkali metal oxide, and transition metal oxide; and
S102: subjecting the solid composite to a carbon coating treatment in a protective atmosphere to obtain the anode material.

In the preparation method of the present embodiment, a buffer layer is formed on surface of the active substance to obtain a solid composite, and the solid composite is subjected to a carbon coating treatment to obtain the anode material. When the carbon layer is formed by the carbon coating treatment, with deposition of carbon atoms on surface of the buffer layer, the carbon nano-material is formed in-situ on surface of amorphous carbon material of the carbon layer under catalysis of metal compound in the buffer layer, which is beneficial to simplify process for preparing the anode material. Among them, the presence of carbon nano-material can not only improve ionic and electronic conductivity of the anode material, improve cycling capacity retention of battery, but also effectively buffer volume expansion of the anode material, such that the anode material can maintain a stable structure, so as to show an excellent cycling performance.

In a specific embodiment, no magnetic material needs to be introduced in the preparation method. That is, the present embodiment provides a preparation method of the anode material without introducing a magnetic material. The preparation method of an anode material without introducing a magnetic material includes the following steps: forming a buffer layer on surface of SiOₓ to obtain a solid composite, where 0<x<2; and subjecting the solid composite to a carbon coating treatment. In a conventional method, a metal such as iron, nickel, and cobalt are adopted to catalyze formation of carbon nano-material, which not only introduces a magnetic substance, but also makes it difficult to control generation of the carbon nano-material. In the preparation method of the present embodiment, no magnetic material needs to be introduced, such that micro short circuit problem caused by the introduction of magnetic material can be effectively avoided, and safety performance and service life of battery can be effectively improved. In addition, after preparing the anode material, no additional demagnetization operation is required to remove the magnetic material introduced during preparation, which effectively simplifies processing technology.

In a specific embodiment, a demagnetization treatment is not required in the preparation method, which is beneficial to further simplify preparation process and improve preparation efficiency.

S101: forming a buffer layer on surface of an active substance to obtain a solid composite, where the buffer layer includes at least one of alkali metal halide, alkali metal nitrogen compound, alkali metal oxide, and transition metal oxide.

In a specific embodiment, the alkali metal halide includes at least one of LiF and NaF, and the alkali metal nitrogen compound includes at least one of Li₃N and KN₃;
The alkali metal oxide includes Li₂O, K₂O, and Na₂O, and the transition metal oxide includes at least one of Li₂O, Al₂O₃, MgO, TiO₂, ZnO, CuO, Ag₂O, and ZrO₂. It should be noted that the use of magnetic metal oxide such as iron, cobalt, and nickel should be avoided, so as to avoid the micro-short circuit problem caused by introduction of magnetic material.

Further preferably, the buffer layer can be, but not limited to, at least one of LiF, Li₂O, Li3N, Al₂O₃, TiO₂, ZnO, and ZrO₂.

In some embodiments, the buffer layer can be formed by directly liquid phase coating with a buffer layer material. For example, the buffer layer material can be at least one of Li₂O, Li3N, Al₂O₃, TiO₂, ZnO, and ZrO₂.

In a specific embodiment, a step of forming a buffer layer on surface of an active substance to obtain a solid composite includes the following steps: mixing a buffer layer material and the active substance in a solvent to prepare a mixed slurry; and subjecting the mixed slurry to a solid-liquid separation treatment to obtain the solid composite.

In a specific embodiment, a step of mixing a buffer layer material and the active substance in a solvent includes the following steps: preparing a buffer layer material dispersion; and mixing the active substance with the buffer layer material dispersion.

In a specific embodiment, during the process of mixing a buffer layer material and the active substance in a solvent, the mixing can be promoted by means of ultrasonicating and/or stirring. During the process of preparing a buffer layer material dispersion, dispersing can be promoted by means of ultrasonicating and/or stirring. During process of dispersing the buffer layer material in the solvent, the dispersing can be promoted by means of ultrasonicating and/or stirring. During the process of mixing the active substance with the buffer layer material dispersion, dispersing can be promoted by means of ultrasonicating and/or stirring.

Optionally, a duration for ultrasonicating and/or stirring is 20 minutes to 120 minutes.

In a specific embodiment, the buffer layer material in the mixed slurry has a particle size of 1 nm to 1 µm. When the buffer layer material is firstly dispersed in the solvent, the buffer layer material in the dispersion has a particle size of 1 nm to 1 µm. Optionally, the buffer layer material in the mixed slurry or in the dispersion has a particle size of 1 nm, 5 nm, 10 nm, 15 nm, 20 nm, 50 nm, 60 nm, 70 nm, 80 nm, 90 nm, 100 nm, 200 nm, 300 nm, 400 nm, 500 nm, 600 nm, 700 nm, 800 nm, 900 nm, etc. It can be understood that the buffer layer material in the mixed slurry or in the dispersion can also have a particle size of other values in the range of 1 nm to 1 µm. When the particle size of the buffer layer material in the mixed slurry or the dispersion is too large, it is difficult to disperse to surface of the active substance, thus cannot achieve coating of the buffer layer. When the particle size of the buffer layer material in the mixed slurry or the dispersion is too small, the buffer layer particles are easy to agglomeration, resulting in uneven dispersion of the carbon nano-material.

In a specific embodiment, the solvent includes water. When selecting the solvent, the buffer layer material and the active substance should be well dispersed and mixed therein.

In a specific embodiment, the buffer layer material accounts for 0.05% to 0.2% by mass of the mixed slurry, and the SiOₓ accounts for 2% to 20% by mass of the mixed slurry. Optionally, a mass ratio of the buffer layer material in the mixed slurry is 0.05%, 0.08%, 0.1%, 0.12%, 0.15%, 0.18%, or 0.2%. A mass ratio of SiOₓ in the mixed slurry is 2%, 3%, 5%, 8%, 10%, 12%, 15%, 18%, or 20%.

As some examples of the solid-liquid separation treatment, the solid-liquid separation treatment includes at least one of suction filtration process, centrifugation process, and spray drying process.

As some examples of the solid-liquid separation treatment, the solid-liquid separation treatment includes spray drying process. In the spray drying process, an inlet temperature is 150°C to 220°C, and an outlet temperature is 60°C to 110°C. Optionally, a duration of spray drying is 30 min to 60 min. Specifically, in the spray drying process, the inlet temperature is 150°C, 160°C, 170°C, 180°C, 190°C, 200°C, 210°C, or 220°C; and the outlet temperature is 60°C, 70°C, 80°C, 90°C, 100°C, or 110°C; the duration of spray drying is 30 min, 35 min, 40 min, 45 min, 50 min, 55 min, or 60 min. It can be understood that, during the spray drying process, the inlet temperature, the outlet temperature, and the duration of spray drying can be selected independently and correspondingly within the ranges and values listed above.

As some examples of the solid-liquid separation treatment, after adopting suction filtration process and centrifugation process for the solid-liquid separation treatment, solid material obtained by solid-liquid separation is dried to obtain a solid composite. Optionally, a drying temperature is 50°C to 100°C, and a duration of drying is 10 h to 30 h. For example, the drying temperature is 50°C, 60°C, 70°C, 80°C, 90°C, or 100°C, and the duration of drying is 10 h, 15 h, 18 h, 20 h, 24 h, 28 h, or 30 h.

In other embodiments, the buffer layer can also be prepared by chemical reaction synthesis. For example, a precursor material of the buffer layer can be a lithium source and a fluorine source.

In a specific embodiment, the step of forming a buffer layer on surface of the active substance by means of chemical reaction synthesis to obtain a solid composite includes: mixing a precursor material of the buffer layer in a solvent to prepare a slurry containing a buffer layer material; and adding the active substance to the slurry for mixing, and subjecting to a solid-liquid separation treatment to obtain the solid composite.

In a specific embodiment, the buffer layer material is LiF. Where, preparing a LiF dispersion includes the following steps: mixing a lithium source and a fluorine source in a solvent to obtain a LiF dispersion. When the buffer layer material is directly adopted for coating, LiF can also be dispersed in a solvent to obtain a LiF dispersion.

Optionally, the lithium source includes at least one of lithium nitrate, lithium acetate, lithium carbonate, and lithium oxalate. The fluorine source includes at least one of ammonium fluoride, sodium fluoride, and calcium fluoride.

Furthermore, when the lithium source and the fluorine source are mixed in a solvent to obtain the LiF dispersion, the lithium source accounts for 0.01% to 0.5% by mass of the dispersion, and the fluorine source accounts for 0.01% to 0.5% by mass of the dispersion. Optionally, a mass ratio of the lithium source in the dispersion is 0.01%, 0.02%, 0.05%, 0.08%, 0.1%, 0.12%, 0.15%, 0.2%, 0.25%, 0.3%, 0.35%, 0.4%, 0.45%, or 0.5%. The mass ratio of fluorine source in the dispersion is 0.01%, 0.02%, 0.05%, 0.08%, 0.1%, 0.12%, 0.15%, 0.2%, 0.25%, 0.3%, 0.35%, 0.4%, 0.45%, or 0.5%. It can be understood that the mass ratio of the lithium source in the dispersion can also be other values in the range of 0.01% to 0.5%, and the mass ratio of the fluorine source in the dispersion can also be other values in the range of 0.01% to 0.5%.

Furthermore, when LiF catalyzes carbon atoms to form in situ the carbon nano-material, catalytic effect of LiF is weaker than that of metal catalyst. For example, the catalytic effect of LiF is weaker than that of iron, cobalt, and nickel, etc., allowing for more convenient control of formation and growth of the carbon nano-material.

In a specific embodiment, the active substance includes SiOₓ material, where 0<x<2. Through heat treatment, the SiOₓ material can be partially differentiated to form Si and SiO₂, strengthening its internal buffer matrix, such that initial lithium intercalation platform can gradually approach to Si element, improving electrochemical performance of SiOₓ.

In a specific embodiment, the heat treatment is performed in a protective atmosphere. The protective atmosphere includes at least one of nitrogen, argon, helium, neon, krypton, and xenon. It can be understood that an equipment of the heat treatment can be a tube furnace or a box furnace.

S102: subjecting the solid composite to a carbon coating treatment in a protective atmosphere to obtain the anode material.

Specifically, the protective atmosphere includes at least one of nitrogen, argon, helium, neon, krypton, and xenon. Further, during the carbon coating treatment, a flow rate of the protective atmosphere fed is 2 mL/min to 1000 mL/min. For example, the flow rate of the protective atmosphere fed is 2 mL/min, 8 mL/min, 10 mL/min, 15 mL/min, 20 mL/min, 30 mL/min, 40 mL/min, 50 mL/min, 80 mL/min, 100 mL/min, 150 mL/min, 200 mL/min, 300 mL/min, 400 mL/min, 500 mL/min, 600 mL/min, 700 mL/min, 800 mL/min, 900 mL/min, or 1000 mL/min, etc. It can be understood that the flow rate of the protective atmosphere fed can also be other values in the range of 2 mL/min to 1000 mL/min.

In a specific embodiment, S102 includes: pre-heating the solid composite, and subjecting to a carbon coating treatment.

In a specific embodiment, the pre-heating the solid composite can be performed by pre-heating the solid composite with a pre-heated protective atmosphere, such that catalytic activity of metal compound in the solid composite can be activated in advance, which is beneficial to formation of carbon nano-material by catalyzing carbon material in the subsequent carbon coating treatment.

Specifically, during pre-heating the solid composite with a pre-heated protective atmosphere, the protective atmosphere is pre-heated to 100°C to 300°C. The pre-heating temperature of the protective atmosphere means the temperature of the protective atmosphere before the carbon coating treatment. Within the pre-heating temperature range, the temperature of the protective atmosphere can be effectively adopted to pre-heat the solid composite, and damage to material structure in the solid composite under vacuum pre-heating can also be avoided. The metal compounds (alkali metal halide, alkali metal nitrogen compound, alkali metal oxide, or transition metal oxide) in the solid composite after pre-heating can fully play a catalytic role to promote formation of the carbon nano-material.

Further, during pre-heating the protective atmosphere, the protective atmosphere is pre-heated to a preset temperature at a temperature rise rate of 1 alidere can be effectively adopted to pree tonon, kryptons i to 300°C. The temperature of the protective atmosphere is raised to 100°C to 300°C at 1°C/min to 50°C/min. For example, the temperature of the protective atmosphere is raised to 100°C to 300°C at 1°C/min, 2°C/min, 3°C/min, 4°C/min, 5°C/min, 6°C/min, 7°C/min, 8°C/min, 9°C/min, 10°C /min, 15°C/min, 20°C/min, 25°C/min, 30°C/min, 35°C/min, 40°C/min, 45°C/min, or 50°C/min .

During performing the carbon coating treatment, the temperature of the protective atmosphere is firstly raised to the pre-heating temperature of 100°C to 300°C at 1°C/min to 50°C/min, then the solid composite is mixed with the carbon source, and heated to pyrolysis temperature of 600°C to 1200°C of the carbon source at 0.1°C/min to 10°C/min. During the carbon coating treatment, when the pyrolysis temperature of the carbon source is too low, it is difficult for complete pyrolysis to obtain the carbon layer. When the pyrolysis temperature of the carbon source is too high, the SiOₓ core will be severely disproportionated, which affect activity of the SiOₓ core, and is not beneficial to improvement of performance of the anode material. And when the temperature is too high, energy consumption and cost of carbon coating will also increase accordingly. During the carbon coating treatment, controlling temperature rise rate which rises to the pyrolysis temperature of the carbon source and the pyrolysis temperature of the carbon source can effectively control disproportionation degree of the SiOₓ core and maintain activity of the SiOₓ core, which is beneficial to improvement of performance of the anode material.

In a specific embodiment, when the carbon source includes a liquid carbon source and a solid carbon source, a heat treatment is performed on the solid composite after the carbon coating treatment.

As some examples of the carbon coating treatment, the carbon coating treatment includes at least one of solid-phase carbon coating process, liquid-phase carbon coating process, and gas-phase carbon coating process.

In a specific embodiment, the carbon coating treatment includes the following steps: mixing the solid composite with a carbon source in a protective atmosphere, and making a pyrolysis of the carbon source to form the carbon layer on particle surface of the solid composite.

Specifically, the pyrolysis of the carbon source has a temperature of 600°C to 1200°C. For example, the pyrolysis of the carbon source has a temperature of 600°C, 650°C, 700°C, 750°C, 800°C, 850°C, 900°C, 950°C, 1000°C, 1050°C, 1100°C, 1150°C, or 1200°C. It can be understood that the pyrolysis of the carbon source can also have a temperature of other values in the range of 600°C to 1200°C.

Specifically, the pyrolysis of the carbon source has a temperature rise rate of 0.1°C/min to 10°C/min, that is, temperature is raised to the temperature of the pyrolysis of the carbon source at the temperature rise rate of 0.1°C/min to 10°C/min. At this time, the temperature rise rate means the temperature rise rate at which the temperature of the solid composite and the carbon source is raised from initial temperature to the heat treatment temperature. For example, the temperature rise rate is 0.1°C/min, 0.2°C/min, 0.5°C/min, 0.8°C/min, 1°C/min, 1.5°C/min, 2°C/min, 2.5°C/min, 3°C/min, 3.5°C/min, 4°C/min, 4.5°C/min, 5°C/min, 5.5°C/min, 6°C/min, 6.5°C/min, 7°C/min, 7.5°C/min, 8°C/min, 8.5°C/min, 9°C/min, 9.5°C/min, or 10°C/min. It can be understood that the pyrolysis of the carbon source can also have a temperature rise rate of other values in the range of 0.1e can also C/min,
Specifically, the pyrolysis of the carbon source has a duration of 1 h to 50 h. Preferably, the duration for pyrolysis is 1 h to 10 h. In some optional embodiments, the duration for pyrolysis is 1 h, 2 h, 3 h, 4 h, 5 h, 6 h, 7 h, 8 h, 9 h, or 10 h. It can be understood that the duration for pyrolysis can also be other values in 1 h to 10 h.

In a specific embodiment, before forming the buffer layer on surface of the active substance, the method further includes: subjecting the SiOₓ to a thermal disproportionation treatment. By subjecting the SiOₓ to a thermal disproportionation treatment firstly, Si grain size can be controlled in advance, and then preforming carbon coating can make the initial lithium intercalation platform gradually approach to Si element, to improve electrochemical performance of SiOₓ. Further, the thermal disproportionation treatment has a temperature of 800°C to 1400°C. For example, the thermal disproportionation treatment has a temperature of 800°C, 850°C, 900°C, 950°C, 1000°C, 1050°C, 1100°C, 1150°C, 1200°C, 1250°C, 1300°C, 1350°C, or 1400°C. It can be understood that the thermal disproportionation treatment can also have a temperature of other values in the range of 800°C to 1400°C. Still further, the thermal disproportionation treatment has a temperature rise rate of 1s a temperature rise rate of treathermal disproportionation treatment can have a temperature rise rate of 1°C/min, 1.5°C/min, 2°C/min, 2.5°C/min, 3°C/min, 3.5°C/min, 4°C/min, 4.5°C/min, or 5°C/min. Optionally, the temperature of the thermal disproportionation treatment is selected to be higher than the temperature of pyrolysis.

It can be understood that, during subjecting to a carbon coating treatment, an equipment of the carbon coating treatment can be a rotary kiln, a box furnace, a roller kiln, a tunnel kiln, a pusher kiln, etc.

It is also understood that during mixing the solid composite with the carbon source, the solid composite is cooled prior to mixing it with the carbon source.

In a specific embodiment, the carbon source includes a gas-phase carbon source. Further, the carbon source includes a gas-phase hydrocarbon carbon source. Still further, the carbon source includes at least one of methane, ethane, propane, ethylene, propylene, acetylene, propyne, acetone, and benzene. At this time, during the carbon coating treatment, the gas-phase carbon source is introduced to mix with the solid composite in a protective atmosphere. During pyrolysis of the carbon source, amorphous carbon is deposited on surface of the solid composite for carbon coating. Optionally, when the carbon source includes the gas-phase carbon source, the carbon coating treatment is performed in a rotary furnace or a box furnace.

In another specific embodiment, the carbon source includes a liquid-phase carbon source. Further, the carbon source includes a liquid-phase organic carbon source. Further, the carbon source includes at least one of n-hexane, toluene, benzene, xylene, methanol, ethanol, propanol, butanol, pentanol, acetone, butanone, 2-pentanone, methyl acetate, ethyl acetate, propyl acetate, butyl acetate, and amyl acetate. Optionally, when a liquid-phase carbon source is adopted, a flow rate of the liquid-phase carbon source is 1 mL/min to 200 mL/min. For example, the flow rate of liquid carbon source is 1 mL/min, 5 mL/min, 8 mL/min, 10 mL/min, 15 mL/min, 20 mL/min, 30 mL/min, 40 mL/min, 50 mL/min, 80 mL/min, 100 mL/min, 150 mL/min, and 200 mL/min. Optionally, the carbon source includes at least one of benzene and toluene, or at least one of methanol, ethanol, propanol, butanol, and pentanol. Optionally, when the carbon source includes the liquid carbon source, the carbon coating treatment is performed in a rotary kiln, a box furnace, a roller kiln, a tunnel kiln, or a pusher kiln. When the carbon source includes the liquid-phase carbon source, a mixing manner of the solid composite and the carbon source can be VC mixing, fusion, ball milling, suction filtration, heating to reflux, three-dimensional mixing, or fluidized bed mixing, etc.

In another specific embodiment, the carbon source includes a solid-phase carbon source. Further, the carbon source includes a solid-phase organic carbon source. Still further, the carbon source includes at least one of citric acid, glucose, pitch, phenolic resin, and furfural resin. Optionally, when the carbon source includes a solid-phase carbon source, the carbon coating treatment is performed in a rotary kiln, a box furnace, a roller kiln, a tunnel kiln, or a pusher kiln. When the carbon source includes a solid-phase carbon source, a mixing manner of the solid composite and the carbon source can be VC mixing, fusion, ball milling, suction filtration, heating to reflux, three-dimensional mixing, or fluidized bed mixing, etc.

Further, after subjecting the solid composite to a carbon coating treatment, the method further includes: subjecting the solid composite after carbon coating treatment to a heat treatment, where the heat treatment has a temperature of 600°C to 1200°C, the heat treatment has a duration of 1 h to 48 h, and the heat treatment has a temperature rise rate of 1°C/min to 5°C/min. Specifically, the heat treatment can have a temperature of 600°C, 650°C, 700°C, 750°C, 800°C, 850°C, 900°C, 950°C, 1000°C, 1050°C, 1100°C, 1150°C, or 1200°C. The heat treatment can have a duration of 1 h, 1.5 h, 2 h, 2.5 h, 3 h, 3.5 h, or 4 h. The heat treatment can have a temperature rise rate of 1°C/min, 1.5°C/min, 2°C/min, 2.5°C/min, 3°C/min, 3.5°C/min, 4°C/min, 4.5°C/min, or 5°C/min. It can be understood that, during the heat treatment, the temperature of the heat treatment, the duration of the heat treatment, and the temperature rise rate of the heat treatment can be selected independently and correspondingly within the ranges and values listed above. It can also be understood that the temperature rise rate of the heat treatment means the temperature rise rate at which the temperature of the heat treatment is raised from initial temperature to the heat treatment temperature.

In addition to the above anode material and the preparation method of the anode material, another embodiment of the present disclosure provides an anode pole piece. The anode pole piece includes the above anode material; or includes the anode material prepared by the above preparation method.

Further, the anode pole piece includes a current collector and the above anode material; or includes a current collector and the anode material prepared by the above preparation method. The anode material is provided on surface of the current collector. Optionally, the current collector is a copper current collector or an aluminum current collector.

Another embodiment of the present disclosure provides a lithium ion battery. The lithium ion battery includes the above anode material, or the anode material prepared by the above preparation method. The lithium ion battery has a high cycling capacity retention.

Another embodiment of the present disclosure provides a lithium ion battery. The lithium ion battery includes the above anode pole piece.

Another embodiment of the present disclosure provides a rechargeable electric product. The rechargeable electrical product includes the above anode material, or the anode material prepared by the above preparation method.

Another embodiment of the present disclosure provides a rechargeable electric product. The rechargeable electric product includes the above anode pole piece.

Another embodiment of the present disclosure provides a rechargeable electric product. The rechargeable electric product includes the above lithium ion battery.

As parameter measurement in the present disclosure, optionally, following equipment and method are adopted for measurement:
(1) A scanning electron microscope (SEM) was adopted to confirm particle structure in material, and to characterize uniformity of distribution of Si, O, C, and other elements in material by combining with X to ray energy spectroscopy (EDS).
(2) A laser particle size analyzer was adopted to measure D₅₀, D₉₀, and D₁₀, and then the value of (D₉₀ to D₁₀)/D₅₀ was calculated, and a symmetrical distribution similar to normal distribution was present. In volume benchmark distribution, cumulative 10% diameter is D₁₀, cumulative 50% diameter is D₅₀, and cumulative 90% diameter is D₉₀. The range of (D₉₀-D₅₀)/(D₅₀-D₁₀) is 1.2 to 1.6.
(3) A Micromeritics Tristar3020 specific surface area and pore size analyzer was adopted to test specific surface area.
(4) A PANalytical X'pert Pro X-ray diffractometer was adopted to measure XRD peak, and then Jade 6.5 software was adopted to fit Si peak in the XRD, to obtain Si microcrystal size.
(5) Method for measuring planar density of the carbon nano-material: selecting randomly three areas with an area of 100 mm*75 mm to take SEM photos, opening pre-saved SEM images using ProSEM software, selecting a typical feature (nanowire structure) in this 2D image, clicking the "Find Similar" button to search for similar features, searching by ProSEM for the similar features in the image automatically, so as to get number of nanowires in these areas, dividing SEM images size by the number to obtain the planar density of the carbon nano-materials, and averaging values of the planar density of the carbon nano-materials in the three areas.

The following are specific examples.

### Example 1

The preparation method of the anode material in the present example was:
(1) 10 g of LiF was dispersed in 10 L of deionized water, stirred and ultrasonicated for 60 min to obtain a dispersion;
(2) 200 g of SiO powder (with a sphericity coefficient of 0.5) was added into the dispersion, and stirred for 2 h to obtain a mixed slurry;
(3) the mixed slurry was centrifuged, and dried at 85°C for 24 h to obtain a solid composite; and
(4) the solid composite was subjected to a carbon coating treatment; where, the carbon coating treatment was performed by adopting methane as a carbon source, and nitrogen as a protective atmosphere, and adopting a rotary furnace. Specifically, the protective atmosphere was heated at 25°C/min to a pre-heating temperature of 200°C at a flow rate of 5 L/min, then kept the temperature for 30 min. The solid composite was pre-heated using the pre-heated protective atmosphere. The pre-heated solid composite was mixed with the carbon source, and then heated at 5dg the temperature and then ate of 5ci900 5dg the carbon source with a pyrolysis duration of 25 h, to obtain the anode material.

The anode material prepared by the present example includes a SiO core, and a LiF buffer layer and a carbon layer both on surface of the SiO core, where the LiF buffer layer is formed on surface of the SiO core, and the carbon layer includes an amorphous carbon material on surface of the buffer layer, and a carbon nano-material extending in a direction toward and away from the buffer layer. The carbon nano-material is a carbon nanowire. The carbon nano-material has a diameter of 50 nm, an aspect ratio of 100, and a planar density of 300 pcs/mm².

The LiF buffer layer has a thickness of 0.5 µm, and the carbon layer has a thickness of 500 nm. Among them, the buffer layer accounts for 5% by mass of the anode material, and the carbon layer accounts for 5% by mass of the anode material.

### Example 2

The preparation method of the anode material in the present example was:
(1) lithium nitrate and sodium fluoride were mixed in deionized water, stirred and ultrasonicated for 120 min to obtain a LiF dispersion, where lithium nitrate accounted for 2% by mass of the dispersion, and sodium fluoride accounted for 2% by mass of the dispersion.
(2) 80 g of SiO_{1.5} powder (with a sphericity coefficient of 0.45) was added into the LiF dispersion, and stirred for 2 h to obtain a mixed slurry;
(3) the mixed slurry was suction filtered, and dried at 90redslu18 h to obtain a solid composite;
(4) the solid composite was subjected to a carbon coating treatment; where, the carbon coating treatment was performed by adopting low-temperature liquid-phase pitch as a carbon source, and nitrogen as a protective atmosphere, and adopting a rotary furnace. Specifically, the protective atmosphere was heated at 50°C/min to a pre-heating temperature of 300°C at a flow rate of 0.5 L/min, then kept the temperature for 30 min. The solid composite was pre-heated using the pre-heated protective atmosphere. The pre-heated solid composite was mixed with the carbon source, and then heated at 0.1°C.1in, then kept the temperature for 38001in, then kept the temperature for 30 min. The solid1 h; and
(5) the carbon coated composite was placed in a kiln, and heat treated at 980°C for 24 h to obtain the anode material.

The grain structure of the anode material prepared by the present example includes a SiO_{1.5} core, and a LiF buffer layer and a carbon layer both on surface of the SiO_{1.5} core, where the LiF buffer layer is formed on surface of the SiO_{1.5} core, and the carbon layer includes an amorphous carbon material on surface of the buffer layer, and a carbon nano-material extending in a direction toward and away from the buffer layer. The carbon nano-material is a carbon nanotube. The carbon nano-material has a diameter of 20 nm, an aspect ratio of 500, and a planar density of 1000 pcs/mm².

The LiF buffer layer has a thickness of 0.02 µm, and the carbon layer has a thickness of 1000 nm. Among them, the buffer layer accounts for 15% by mass of the anode material, and the carbon layer accounts for 8% by mass of the anode material.

### Example 3

The preparation method of the anode material in the present example was:
(1) 10 g of LiF was dispersed in 6 L of deionized water, stirred and ultrasonicated for 90 min to obtain a dispersion ;
(2) 50 g of SiO_{0.8} powder (with a sphericity coefficient of 0.55) was added into the dispersion, and stirred for 2 h to obtain a mixed slurry ;
(3) the mixed slurry was spray dried, with an inlet temperature of 180°C and an outlet temperature of 90°C, to obtain a solid composite;
(4) the solid composite was subjected to a carbon coating treatment; where, the carbon coating treatment was performed by adopting glucose as a carbon source, and nitrogen as a protective atmosphere, and adopting a roller kiln. Specifically, the protective atmosphere was heated at 1°C/min to a pre-heating temperature of 100°C, then kept the temperature for 20 min. The solid composite was pre-heated using the pre-heated protective atmosphere. The pre-heated solid composite was mixed with the carbon source VC, and then heated at 10°C0and then heated at osite was pre-hea600and then heated at osite was pre-heated using the pr50 h; and
(5) the carbon coated composite was placed in a kiln, and heat treated at 1000°C for 18 h to obtain the anode material.

The anode material prepared by the present example includes a SiO_{0.8} core, and a LiF buffer layer and a carbon layer both on surface of the SiO_{0.8} core, where the LiF buffer layer is formed on surface of the SiO_{0.8} core, and the carbon layer includes an amorphous carbon material on surface of the buffer layer, and a carbon nano-material extending in a direction toward and away from the buffer layer. The carbon nano-material is a carbon nanofiber. The carbon nano-material has a diameter of 100 nm, an aspect ratio of 1000, and a planar density of 5000 pcs/mm².

The LiF buffer layer has a thickness of 1.5 µm, and the carbon layer has a thickness of 200 nm. Among them, the buffer layer accounts for 20% by mass of the anode material, and the carbon layer accounts for 2% by mass of the anode material.

### Example 4

The example was conducted as Example 1 excepting that LiF was replaced by Al₂O₃.

The anode material prepared by the present example includes a SiO core, and a Al₂O₃ buffer layer and a carbon layer both on surface of the SiO core, where the Al₂O₃ buffer layer is formed on surface of the SiO core, and the carbon layer includes an amorphous carbon material on surface of the buffer layer, and a carbon nano-material extending in a direction toward and away from the buffer layer. The carbon nano-material is a carbon nanowire. The carbon nano-material has a diameter of 60 nm, an aspect ratio of 80, and a planar density of 200 pcs/mm².

The Al₂O₃ buffer layer has a thickness of 0.5 µm, and the carbon layer has a thickness of 500 nm. Among them, the buffer layer accounts for 5% by mass of the anode material, and the carbon layer accounts for 5% by mass of the anode material.

### Example 5

The example was conducted as Example 1 excepting that LiF was replaced by Li₂O.

The anode material prepared by the present example includes a SiO core, and a Li₂O buffer layer and a carbon layer both on surface of the SiO core, where the Li₂O buffer layer is formed on surface of the SiO core, and the carbon layer includes an amorphous carbon material on surface of the buffer layer, and a carbon nano-material extending in a direction toward and away from the buffer layer. The carbon nano-material is a carbon nanowire. The carbon nano-material has a diameter of 40 nm, an aspect ratio of 90, and a planar density of 250 pcs/mm².

The Li₂O buffer layer has a thickness of 0.9 µm, and the carbon layer has a thickness of 500 nm. Among them, the buffer layer accounts for 5% by mass of the anode material, and the carbon layer accounts for 5% by mass of the anode material.

### Example 6

The example was conducted as Example 1 excepting that LiF was replaced by TiO₂.

The anode material prepared by the present example includes a SiO core, and a TiO₂ buffer layer and a carbon layer both on surface of the SiO core, where the TiO₂ buffer layer is formed on surface of the SiO core, and the carbon layer includes an amorphous carbon material on surface of the buffer layer, and a carbon nano-material extending in a direction toward and away from the buffer layer. The carbon nano-material is a carbon nanowire. The carbon nano-material has a diameter of 70 nm, an aspect ratio of 150, and a planar density of 500 pcs/mm².

The TiO₂ buffer layer has a thickness of 1 µm, and the carbon layer has a thickness of 500 nm. Among them, the buffer layer accounts for 5% by mass of the anode material, and the carbon layer accounts for 5% by mass of the anode material.

### Example 7

The example was conducted as Example 1 excepting that before adding SiO powder to the dispersion, the SiO powder was subjected to a thermal disproportionation treatment with a temperature of 900°C.

The anode material prepared by the present example includes a SiO core, and a LiF buffer layer and a carbon layer both on surface of the SiO core, where the LiF buffer layer is formed on surface of the SiO core, and the carbon layer includes an amorphous carbon material on surface of the buffer layer, and a carbon nano-material extending in a direction toward and away from the buffer layer. The carbon nano-material is a carbon nanowire. The carbon nano-material has a diameter of 50 nm, an aspect ratio of 100, and a planar density of 300 pcs/mm².

The LiF buffer layer has a thickness of 0.5 µm, and the carbon layer has a thickness of 500 nm. Among them, the buffer layer accounts for 5% by mass of the anode material, and the carbon layer accounts for 5% by mass of the anode material.

### Example 8

The example was conducted as Example 1 excepting that the pyrolysis temperature of the carbon source was 600°C.

The anode material prepared by the present example includes a SiO core, and a LiF buffer layer and a carbon layer both on surface of the SiO core, where the LiF buffer layer is formed on surface of the SiO core, and the carbon layer includes an amorphous carbon material on surface of the buffer layer, and a carbon nano-material extending in a direction toward and away from the buffer layer. The carbon nano-material is a carbon nanowire. The carbon nano-material has a diameter of 50 nm, an aspect ratio of 160, and a planar density of 200 pcs/mm².

The LiF buffer layer has a thickness of 0.5 µm, and the carbon layer has a thickness of 500 nm. Among them, the buffer layer accounts for 5% by mass of the anode material, and the carbon layer accounts for 5% by mass of the anode material.

### Example 9

The example was conducted as Example 1 excepting that the pyrolysis temperature of the carbon source was 1200°C.

The anode material prepared by the present example includes a SiO core, and a LiF buffer layer and a carbon layer both on surface of the SiO core, where the LiF buffer layer is formed on surface of the SiO core, and the carbon layer includes an amorphous carbon material on surface of the buffer layer, and a carbon nano-material extending in a direction toward and away from the buffer layer. The carbon nano-material is a carbon nanowire. The carbon nano-material has a diameter of 80 nm, an aspect ratio of 260, and a planar density of 2000 pcs/mm².

The LiF buffer layer has a thickness of 0.4 µm, and the carbon layer has a thickness of 500 nm. Among them, the buffer layer accounts for 5% by mass of the anode material, and the carbon layer accounts for 5% by mass of the anode material.

### Example 10

The example was conducted as Example 2 excepting that the temperature of the heat treatment after carbon coating treatment was 600°C.

The anode material prepared by the present example includes a SiO_{1.5} core, and a LiF buffer layer and a carbon layer both on surface of the SiO_{1.5} core, where the LiF buffer layer is formed on surface of the SiO_{1.5} core, and the carbon layer includes an amorphous carbon material on surface of the buffer layer, and a carbon nano-material extending in a direction toward and away from the buffer layer. The carbon nano-material is a carbon nanotube. The carbon nano-material has a diameter of 15 nm, an aspect ratio of 300, and a planar density of 200 pcs/mm².

The LiF buffer layer has a thickness of 0.02 µm, and the carbon layer has a thickness of 1000 nm. Among them, the buffer layer accounts for 15% by mass of the anode material, and the carbon layer accounts for 5% by mass of the anode material.

### Example 11

The example was conducted as Example 2 excepting that the temperature of the heat treatment after carbon coating treatment was 1200°C.

The anode material prepared by the present example includes a SiO_{1.5} core, and a LiF buffer layer and a carbon layer both on surface of the SiO_{1.5} core, where the LiF buffer layer is formed on surface of the SiO_{1.5} core, and the carbon layer includes an amorphous carbon material on surface of the buffer layer, and a carbon nano-material extending in a direction toward and away from the buffer layer. The carbon nano-material is a carbon nanotube. The carbon nano-material has a diameter of 50 nm, an aspect ratio of 600, and a planar density of 4000 pcs/mm².

The LiF buffer layer has a thickness of 0.015 µm, and the carbon layer has a thickness of 1000 nm. Among them, the buffer layer accounts for 15% by mass of the anode material, and the carbon layer accounts for 5% by mass of the anode material.

### Example 12

(1) 10 g of LiF was dispersed in 10 L of deionized water, stirred and ultrasonicated for 60 min to obtain a dispersion;
(2) 20 g of SiO powder (with a sphericity coefficient of 0.5) was added into the dispersion, and stirred for 2 h to obtain a mixed slurry;
(3) the mixed slurry was centrifuged, and dried at 85°C for 24 h to obtain a solid composite; and
(4) the solid composite was subjected to a carbon coating treatment; where, the carbon coating treatment was performed by adopting methane as a carbon source, and nitrogen as a protective atmosphere, and adopting a rotary furnace. Specifically, the protective atmosphere was heated at 25°C/min to a pre-heating temperature of 200°C at a flow rate of 1 L/min, then kept the temperature for 20 min. The solid composite was pre-heated using the pre-heated protective atmosphere. The pre-heated solid composite was mixed with the carbon source, and then heated at 5°C/min to the pyrolysis temperature of 900°C of the carbon source, with a pyrolysis duration of 25 h.

The anode material prepared by the present example includes a SiO core, and a LiF buffer layer and a carbon layer both on surface of the SiO core, where the LiF buffer layer is formed on surface of the SiO core, and the carbon layer includes an amorphous carbon material on surface of the buffer layer, and a carbon nano-material extending in a direction toward and away from the buffer layer. The carbon nano-material is a graphene. The carbon nano-material has a diameter of 100 nm, an aspect ratio of 10000, and a planar density of 40000 pcs/mm².

The LiF buffer layer has a thickness of 0.5 µm, and the carbon layer has a thickness of 800 nm. Among them, the buffer layer accounts for 50% by mass of the anode material, and the carbon layer accounts for 5% by mass of the anode material.

### Example 13

The example was conducted as Example 1 excepting that a SiO with a sphericity coefficient of 0.96 was selected as a raw material.

The anode material prepared by the present example includes a SiO core, and a LiF buffer layer and a carbon layer both on surface of the SiO core, where the LiF buffer layer is formed on surface of the SiO core, and the carbon layer includes an amorphous carbon material on surface of the buffer layer, and a carbon nano-material extending in a direction toward and away from the buffer layer. The carbon nano-material is a carbon nanowire. The carbon nano-material has a diameter of 50 nm, an aspect ratio of 100, and a planar density of 300 pcs/mm².

The LiF buffer layer has a thickness of 0.5 µm, and the carbon layer has a thickness of 500 nm. Among them, the buffer layer accounts for 5% by mass of the anode material, and the carbon layer accounts for 5% by mass of the anode material.

### Example 14

The example was conducted as Example 2 excepting the pre-heated protective atmosphere was not adopted to pre-heat the solid composite during subjecting the solid composite to a carbon coating treatment in the step (4).

The anode material prepared by the present example includes a SiO_{1.5} core, and a LiF buffer layer and a carbon layer both on surface of the SiO_{1.5} core, where the LiF buffer layer is formed on surface of the SiO_{1.5} core, and the carbon layer includes an amorphous carbon material on surface of the buffer layer, and a carbon nano-material extending in a direction toward and away from the buffer layer. The carbon nano-material is a carbon nanotube. The carbon nano-material has a diameter of 20 nm, an aspect ratio of 500, and a planar density of 15 pcs/mm².

The LiF buffer layer has a thickness of 0.02 µm, and the carbon layer has a thickness of 1000 nm. Among them, the buffer layer accounts for 15% by mass of the anode material, and the carbon layer accounts for 8% by mass of the anode material.

### Comparative Example 1

The preparation method of the anode material in the present comparative example was:
200 g of SiO (with a sphericity coefficient of 0.50) was subjected to a carbon coating treatment; where, the carbon coating treatment was performed by adopting methane as a carbon source, and nitrogen as a protective atmosphere, and adopting a rotary furnace. Specifically, the protective atmosphere was heated at 25°C/min to a pre-heating temperature of 200°C at a flow rate of 8 L/min, then the SiO was mixed with the carbon source, and then heated at 5°C/min to the pyrolysis temperature of 900°C of the carbon source with a pyrolysis duration of 25 h.

The anode material prepared by the present comparative example includes a SiO core and an amorphous carbon layer on surface of the SiO core, without a nanostructure. The carbon layer has a thickness of 500 nm, and the carbon layer accounts for 5% by mass of the anode material.

### Comparative Example 2

The preparation method of the anode material in the present example was:
(1) 71.7 g of ferrocene was dispersed in 10 L of deionized water, stirred and ultrasonicated for 60 min to obtain a dispersion;
(2) 200 g of SiO powder (with a sphericity coefficient of 0.50) was added into the dispersion, and stirred for 2 h to obtain a mixed slurry;
(3) the mixed slurry was centrifuged, and dried at 85°C for 24 h to obtain a solid composite; and
(4) the solid composite was subjected to a carbon coating treatment, to obtain the anode material; where, the carbon coating treatment was performed by adopting methane as a carbon source, and nitrogen as a protective atmosphere, and adopting a rotary furnace. Specifically, the protective atmosphere was heated at 25°C/min to a pre-heating temperature of 200°C at a flow rate of 10 L/min. Then the solid composite was mixed with the carbon source, and then heated at 5°C/min to the pyrolysis temperature of 900°C of the carbon source with a pyrolysis duration of 25 h.

The anode material prepared by the present comparative example includes a SiO core and a carbon layer on surface of the SiO core, where the carbon layer includes an amorphous carbon material and a carbon nano-material on surface of the SiO core. The carbon nano-material is a carbon nanowire. The carbon nano-material has a diameter of 100 nm, an aspect ratio of 10000, and a planar density of 100000 pcs/mm². The carbon layer has a thickness of 500 nm, and the carbon layer accounts for 5% by mass of the anode material.

In the present comparative example, the anode material also includes a ferromagnetic material. The existence of the ferromagnetic material may cause a micro-short circuit problem of battery, and further demagnetization treatment is required for the anode material.

### Comparative Example 3

The preparation method of the anode material in the comparative example was:
(1) a carbon nanotube was weighed and added to deionized water, stirred for 45 min. 200 g of SiO powder (with a sphericity coefficient of 0.50) was added, stirred for 3 h. Alcohol was added, stirred for 30 min, then suction filtered and dried to obtain a carbon nanotube composite SiO material; where the carbon nanotube had a mass content of 0.10%; and
(2) the carbon nanotube composite SiO material was subjected to a carbon coating treatment; where, the carbon coating treatment was performed by adopting methane as a carbon source, and nitrogen as a protective atmosphere, and adopting a rotary furnace. Specifically, the protective atmosphere was heated at 25°C/min to a pre-heating temperature of 220°C at a flow rate of 0.5 L/min, then kept the temperature for 30 min. The carbon nanotube composite SiO material was mixed with the carbon source, and then heated at 5°C/min to the pyrolysis temperature of 920nd then heated at 5°C/min to the pyrolysis temperature of 9 holding fthe carbon nanotube composite carbon to coated SiO material.

The anode material prepared by the present comparative example includes a SiO core and a carbon layer on surface of the SiO core, where the carbon layer includes an amorphous carbon material on surface of the SiO core, and a carbon nano-material attached ex-situ to the carbon layer. The carbon nano-material is a carbon nanotube. The carbon nano-material has a diameter of 1.8 nm, an aspect ratio of 2500, and a planar density of 500 pcs/mm². The carbon layer has a thickness of 500 nm, and the carbon layer accounts for 5% by mass of the anode material.

### Comparative Example 4

The preparation method of the anode material in the present comparative example was:
(1) 200 g of SiO (with a sphericity coefficient of 0.5) was subjected to a carbon coating treatment; where, the carbon coating treatment was performed by adopting methane as a carbon source, and nitrogen as a protective atmosphere, and adopting a rotary furnace. Specifically, the protective atmosphere was heated at 25°C/min to a pre-heating temperature of 200°C at a flow rate of 7 L/min. The composite was mixed with the carbon source, and then heated at 5°C/min to the pyrolysis temperature of 900°C of the carbon source with a pyrolysis duration of 25 h;
(2) the carbon coated composite was placed in a kiln, and heat treated at 980°C for 24 h;
(3) 10 g of LiF was dispersed in 10 L of deionized water, stirred and ultrasonicated for 60 min to obtain a dispersion;
(4) the powder obtained in step (2) was added into the dispersion, and stirred for 2 h to obtain a mixed slurry; and
(5) the mixed slurry was centrifuged, and dried at 85°C for 24 h to obtain a solid composite.

The anode material prepared by the present comparative example includes a SiO core, and a carbon layer and a LiF layer both on surface of the SiO core, where the carbon layer is formed on surface of the SiO core, and the LiF layer is provided on surface of the carbon layer, without a carbon nanostructure. The carbon layer has a thickness of 500 nm, and the carbon layer accounts for 5% by mass of the anode material.

### Test Methods

The reversible specific capacity, initial Coulomb efficiency, volume expansion rate after 50 cycles, and capacity retention of lithium ion batteries prepared by the anode materials of Examples 1 to 14 (S1 to S14) and Comparative Examples 1 to 4 (D1 to D4) were tested.
(1) The test methods for the reversible specific capacity and the initial Coulomb efficiency were: an anode slurry was prepared in a ratio of 75:15:10 by mass of the anode material, conductive carbon black, and polyacrylic acid adhesive (PAA adhesive); then coated on a copper foil, dried, to prepare an anode pole piece. A button battery was assembled using a lithium metal pole piece as a counter electrode in a glove box filled with argon. Under a current density of 0.1C, the charging and discharging test was carried out according to the charging and discharging range of 0.01 V to 1.5 V. The initial reversible specific capacity and the initial Coulomb efficiency of the battery were obtained by the test.
(2) The test method for the volume expansion rate and the capacity retention after 50 cycles were: an anode slurry was prepared in a ratio of 92:2:2:2:2 by mass of the anode material, conductive carbon black (Super to P), conductive graphite (KS to 6), carboxymethyl cellulose (CMC), and styrene to butadiene rubber (SBR); then coated on a copper foil, dried, to prepare an anode pole piece. A button battery was assembled using a lithium metal pole piece as a counter electrode in a glove box filled with argon. Under a current density of 1C, the charging and discharging test was carried out according to the charging and discharging range of 0.01 V to 1.5 V The volume expansion rate and the capacity retention of the battery after 50 cycles were obtained by the test.

The performance parameters of the anode materials in Examples 1 to 14 and Comparative Examples 1 to 4 are shown in the table below.

| Performance Parameters | S1 | S2 | S3 | S4 | S5 | S6 | S7 | S8 | S9 |
|---|---|---|---|---|---|---|---|---|---|
| D₁₀ (µm) | 1.7 | 1.6 | 1.8 | 1.7 | 1.6 | 1.7 | 1.7 | 1.6 | 1.8 |
| D₅₀ (µm) | 5.3 | 5.4 | 5.2 | 5.3 | 5.3 | 5.5 | 5.3 | 5.4 | 5.2 |
| (D₉₀ to D₅₀)/(D₅₀ to D₁₀) | 1.4 | 1.2 | 1.6 | 1.4 | 1.5 | 1.3 | 1.4 | 1.5 | 1.4 |
| Specific Surface Area (m²/g) | 2.2 | 2.6 | 4.8 | 2.0 | 2.1 | 2.3 | 2.2 | 2.0 | 2.9 |
| Si Microcrystal Size (nm) | 5.9 | 6.6 | 4.0 | 5.9 | 5.8 | 5.7 | 5.9 | 1.9 | 12.3 |
| Initial Reversible Specific Capacity (mAh/g) | 1508.5 | 1567.2 | 1452.6 | 1500.2 | 1510.3 | 1504.6 | 1492.3 | 1704.5 | 1302.4 |
| Initial Coulomb Efficiency (%) | 77.27 | 77.20 | 77.13 | 77.21 | 77.23 | 77.28 | 77.19 | 75.12 | 78.34 |
| Capacity Retention after 50 cycles (%) | 81.7 | 80.7 | 80.9 | 81.2 | 81.3 | 81.9 | 80.6 | 79.8 | 80.1 |
| Volume Expansion Rate after 50 cycles | 34.3 | 36.2 | 35.1 | 34.9 | 34.5 | 34.1 | 34.4 | 37.1 | 35.9 |
| Carbon Nano-material Planar Density (pcs/mm²) | 300 | 1000 | 5000 | 200 | 250 | 500 | 300 | 300 | 2000 |
| SiOₓ Sphericity | 0.50 | 0.45 | 0.55 | 0.5 | 0.5 | 0.5 | 0.5 | 0.5 | 0.5 |
| Thickness of Buffer Layer (µm) | 0.5 | 0.02 | 1.5 | 0.5 | 0.9 | 1 | 0.5 | 0.5 | 0.4 |

| Performance Parameters | S10 | S11 | S12 | S13 | S14 | D1 | D2 | D3 | D4 |
|---|---|---|---|---|---|---|---|---|---|
| D₁₀ (µm) | 1.6 | 1.5 | 1.7 | 1.7 | 1.7 | 1.7 | 1.7 | 1.7 | 1.7 |
| D₅₀ (µm) | 5.4 | 5.5 | 5.2 | 5.3 | 5.3 | 5.0 | 5.3 | 5.3 | 5.3 |
| (D₉₀ to D₅₀)/(D₅₀ to D₁₀) | 1.2 | 1.3 | 1.4 | 1.15 | 1.3 | 1.4 | 1.5 | 1.4 | 1.4 |
| Specific Surface Area (m²/g) | 2.6 | 2.5 | 9.8 | 2.1 | 2.0 | 3.0 | 9.6 | 2.2 | 2.0 |
| Si Microcrystal Size (nm) | 6.6 | 14.5 | 5.8 | 5.8 | 6.6 | 4.9 | 5.1 | 5.2 | 5.9 |
| Initial Reversible Specific Capacity (mAh/g) | 1560.3 | 1203.5 | 1123.4 | 1512.9 | 1596.3 | 1575.6 | 1213.7 | 1506.3 | 1519.4 |
| Initial Coulomb Efficiency (%) | 77.22 | 78.56 | 66.12 | 77.28 | 77.29 | 77.03 | 69.41 | 77.21 | 77.30 |
| Capacity Retention after 50 cycles (%) | 80.2 | 80.8 | 83.1 | 84.2 | 78.5 | 80.0 | 82.6 | 79.0 | 79.9 |
| Volume Expansion Rate after 50 cycles | 36.5 | 36.4 | 34.9 | 33.1 | 37.6 | 39.7 | 39.4 | 38.4 | 40.0 |
| Carbon Nano-material Planar Density (pcs/mm²) | 1000 | 4000 | 40000 | 300 | 15 | / | 100000 | 500 | / |
| SiOₓ Sphericity | 0.45 | 0.45 | 0.5 | 0.96 | 0.45 | 0.5 | 0.5 | 0.5 | 0.5 |
| Thickness of Buffer Layer (µm) | 0.02 | 0.015 | 5 | 0.5 | 0.02 | / | / | / | / |

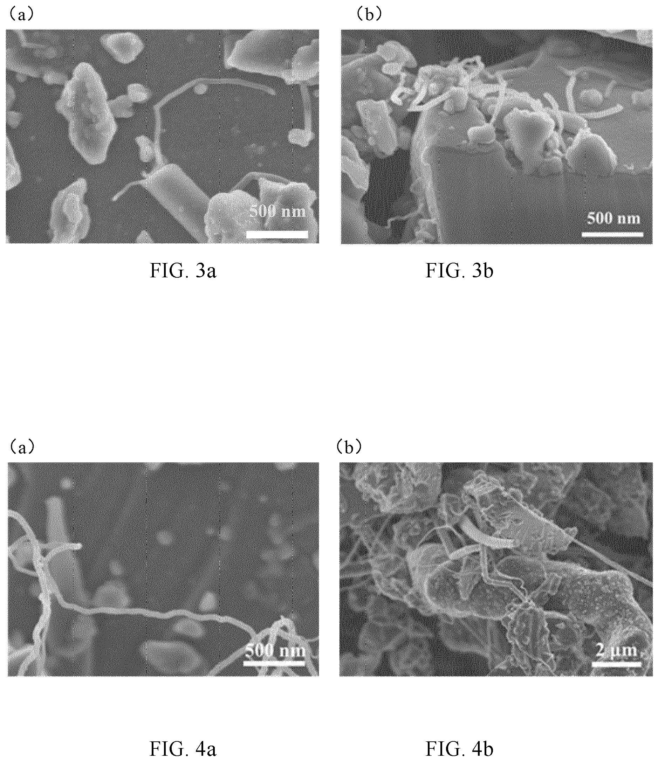

The structure of the anode material of Example 1 is shown in FIG. 3a and FIG. 3b. Where FIG. 3a is a surface structure diagram of the anode material prepared by Example 1, and FIG. 3b is a cross-sectional diagram of the anode material prepared by Example 1. It can be seen from FIG. 3a and FIG. 3b that a nanowire structure is present on surface of the anode material, with a particle size of 100 nm or less. And according to FIG. 3b, it can be seen that part of the nanowires extend toward interior of the anode material.

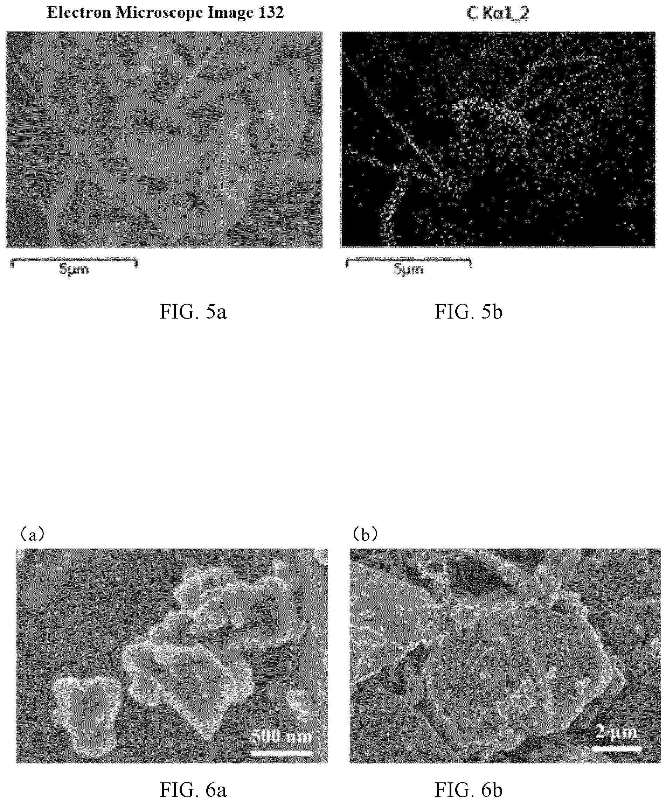

The structure of the anode material of Example 2 is shown in FIG. 4a and FIG. 4b. It can be seen from FIG. 4a and FIG. 4b that nanowires are present on surface of the anode material, and the nanowires are entangled with each other. FIG. 5a shows surface structure of the nanowires in the anode material of Example 2, and FIG. 5b shows the EDS energy spectrum of nanowires in the anode material of Example 2. It can be seen from FIG. 5a and FIG. 5b that the nanowire are mainly composed of carbon element, indicating that a carbon nano-material is formed on surface of the anode material.

The structure of the anode material of Comparative Example 1 is shown in FIG. 6a and FIG. 6b. It can be seen from FIG. 6a and FIG. 6b that no nanowire structure is formed in the anode material of Comparative Example 1, and except that there is no nanowire structure, its surface morphology is similar to that of Example 1 and Example 2.

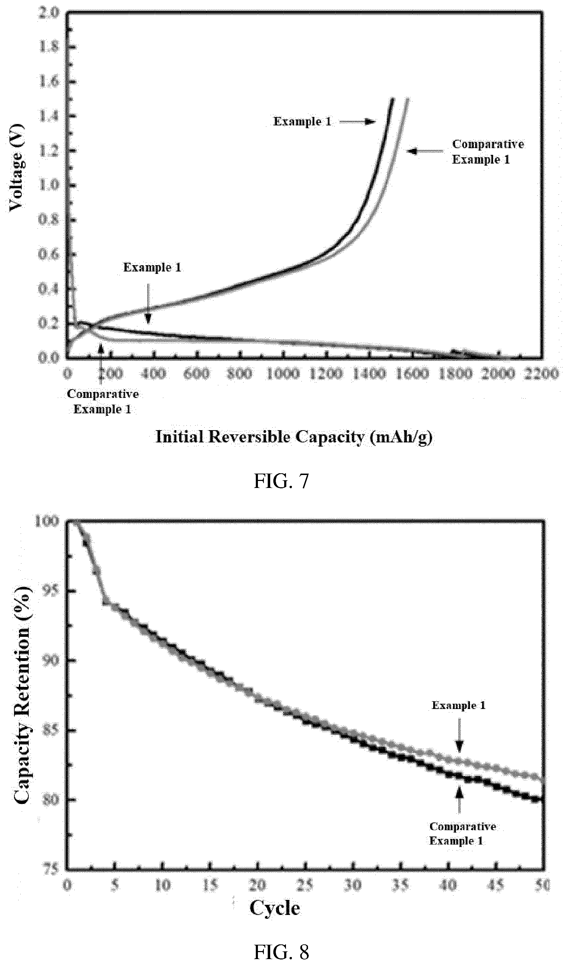

The cycling expansion test results of lithium ion batteries prepared by the anode materials in Example 1 and Comparative Example 1 are shown in FIG. 7, and their cycling capacity retentions are shown in FIG. 8.

It can be seen from FIG. 7 that the charging and discharging platforms of the lithium ion batteries prepared by the anode materials of Example 1 and Comparative Example 1 are close, indicating that the introduction of the buffer layer can make the material maintain better electrochemical performance.

It can be seen from FIG. 8 that the lithium ion batteries prepared by the anode materials of Example 1 and Comparative Example 1 have similar cycling retentions in early stage. But after 25 cycles, the lithium ion battery prepared by the anode material of Example 1 has a cycling retention significantly higher than that of Comparative Example 1. The reason may be that the double-layer flexible structure in the anode material buffers volume expansion of the material, and reduces formation of SEI film. In addition, the presence of the carbon nano-material improves electronic conductivity performance, which promotes improvement of cycling performance of battery.

Comparing Example 1 with Example 14 in the table, it can be seen that if the solid composite is not pre-heated, the metal compound in the solid mixture is put into the reaction furnace at normal temperature, the catalytic activity is low, such that the raw material cannot be completely reacted, affecting formation of the carbon nanotube. As a result, the planar density of the obtained carbon nanowire is small, and side reaction of the material during cycling is reduced, thereby improving the specific capacity and the initial effect. However, the low content of carbon nanotube formed affects the cycling capacity retention and cycling volume expansion rate.

Comparing Comparative Example 1 in the table, Example 1 has higher initial Coulomb efficiency and capacity retention after 50 cycles, and smaller volume expansion rate after 50 cycles. The reason for this is that, the improvement in capacity retention and expansion rate is due to the improved coating toughness and suppression of natural SEI film formation brought about by LiF artificial SEI film structure, which is beneficial to maintain structure integrity of the SiOₓ particle. The improvement of the initial Coulomb efficiency is due to the high electrical insulation and wide bandwidth. This characteristic prevents electrolyte from decomposing, thus limiting formation of additional SEI, which reduces irreversible capacity and leads to improvement of the initial Coulomb efficiency.

Comparing Example 1 with Comparative Example 2 in the table, the main disadvantage of using ferrocene as a catalyst is to require a subsequent demagnetization process in terms of process, so it will be more cumbersome. In addition, when ferrocene is adopted as a catalyst, at a same molar concentration, the planar density of carbon nano-material obtained is greater. Excessive carbon nano-material lead to an increase in the specific surface area of the material, such that the thickness (amount) of SEI formed by the material reacting with the electrolyte during the initial charging and discharging increases, resulting in a decrease in the specific capacity and initial Coulomb efficiency after the reaction, and a slight deterioration in the volume expansion rate and cycling performance of battery.

Comparing Example 1 with Comparative Example 3 in the table, since the CNT added subsequently is not formed in situ and cannot extend through the carbon coating to form a "cage" structure, it is less effective in maintaining stability of interface during cycling compared to Example 1, thus making the particles more susceptible to fragmentation and collapse compared to Example 1. Therefor the continuous penetration of electrolyte allows for continuous formation of new SEI film, resulting in an increased irreversible specific capacity during cycling, which is reflected in a slightly decreased capacity retention rate and a slightly increased expansion rate. It is also shown that the preparation method of Example 1 has better cycling performance compared to adding CNT afterwards.

Comparing Example 1 with Comparative Example 4 in the table, when the C layer is coated on the SiO core, and the buffer layer is coated on the C layer, to form a structure of SiO core-C layer-buffer layer from inside to outside. Although this structure can improve initial Coulomb efficiency to a certain extent, it affects the cycling performance of the material because it coats highly electrically insulated LiF on outermost layer. And the improvement in electrical conductivity brought about by coating the C layer cannot be achieved.

The technical features of the above examples can be combined optionally. For conciseness of the specification, not all possible combinations of the technical features in the above examples are described. However, as long as there is no contradiction in the combination of these technical features, they should be considered as within the scope of the present specification.

The above embodiments only express several implementation modes of the present disclosure, and the description thereof is relatively specific and detailed, but should not be construed as limiting the scope of the present disclosure. It should be noted that those skilled in the art can make several modifications and improvements without departing from the concept of the present disclosure, and these all belong to the protection scope of the present disclosure. Therefore, the protection scope of the present disclosure shall be based on the appended claims, and the description and figures may be adopted to explain the contents of the claims.

## Claims

1. An anode material, **characterized in that** the anode material comprises an active substance, and a buffer layer and a carbon layer both on surface of the active substance, wherein the buffer layer is formed on surface of the active substance, and the carbon layer comprises an amorphous carbon material on surface of the buffer layer, and a carbon nano-material extending in a direction toward and/or away from the buffer layer.

2. The anode material according to claim 1, **characterized in that** the anode material comprises at least one of the following features (1) to (16):
(1) the carbon nano-material extends to the buffer layer in a direction toward the buffer layer;
(2) the carbon nano-material extends in a direction toward the buffer layer and through the buffer layer to the active substance;
(3) the carbon nano-material is connected to the amorphous carbon material and the buffer layer;
(4) the carbon nano-material extends through the buffer layer and is connected to the amorphous carbon material and the active substance;
(5) the carbon nano-material comprises at least one of carbon nanotube, carbon nanofiber, and graphene;
(6) the carbon nano-material has at least one shape of a linear shape, a tubular shape, a sheet shape, and a strip shape;
(7) the carbon nano-material has a diameter of 1 nm to 100 nm;
(8) the carbon nano-material has an aspect ratio of ≥10;
(9) in the anode material, the carbon nano-material has a planar density of 20 pcs/mm² to 10000 pcs/mm²;
(10) the buffer layer comprises at least one of alkali metal halide, alkali metal nitrogen compound, alkali metal oxide, and transition metal oxide;
(11) the buffer layer comprises at least one of LiF, NaF, and Li₃N;
(12) the buffer layer comprises at least one of Li₂O, Al₂O₃, MgO, TiO₂, ZnO, CuO, Ag₂O, and Z₁O₂;
(13) the buffer layer is capable of catalyzing the amorphous carbon material to form the carbon nano-material;
(14) the buffer layer is capable of catalyzing the amorphous carbon material to form in-situ the carbon nano-material;
(15) the buffer layer has a thickness of 0.01 µm to 2 µm; and
(16) the buffer layer comprises at least one of LiF, Li₂O, Li₃N, Al₂O₃, TiO₂, ZnO, and ZrO₂.

3. The anode material according to any one of claims 1 and 2, **characterized in that** the anode material comprises at least one of the following features (1) to (12):
(1) the active substance comprises a SiOₓ material, wherein 0<x<2;
(2) the active substance comprises a SiOₓ material, wherein 0.8≤x≤1.5;
(3) the active substance comprises a SiOₓ material, and a particle of the SiOₓ material has spherical or spherical-like in shape;
(4) the active substance comprises a SiOₓ material, and a particle of the SiOₓ material has a sphericity coefficient of ≥0.4;
(5) the buffer layer accounts for 0.05% to 20% by mass of the anode material;
(6) the carbon layer accounts for 0.5% to 20% by mass of the anode material;
(7) the carbon layer has a thickness of 10 nm to 1500 nm;
(8) the anode material has a D₅₀ of 1 µm to 20 µm;
(9) the anode material has a particle size distribution (D₉₀-D₅₀)/(D₅₀-D₁₀) of 1.2 to 1.6;
(10) the active substance comprises a Si grain;
(11) the active substance comprises a Si grain with a grain size of 2 nm to 10 nm; and
(12) the anode material has a specific surface area of 1 m²/g to 20 m²/g.

4. A preparation method of an anode material, comprising:
forming a buffer layer on surface of an active substance to obtain a solid composite, wherein the buffer layer comprises at least one of alkali metal halide, alkali metal nitrogen compound, alkali metal oxide, and transition metal oxide; and
subjecting the solid composite to a carbon coating treatment in a protective atmosphere to obtain the anode material, wherein the anode material comprises the active substance, and the buffer layer and a carbon layer both on surface of the active substance, the carbon layer comprises an amorphous carbon material, and a carbon nano-material extending in a direction from the amorphous carbon material toward and/or away from the buffer layer.

5. The preparation method according to claim 4, **characterized in that** the preparation method comprises at least one of the following features (1) to (6):
(1) the active substance comprises a SiOₓ material, wherein 0<x<2;
(2) the active substance comprises a SiOₓ material, wherein 0.8≤x≤1.5;
(3) the active substance comprises a SiOₓ material, and a particle of the SiOₓ material has spherical or spherical-like in shape;
(4) the active substance comprises a SiOₓ material, and a particle of the SiOₓ material has a sphericity coefficient of ≥0.4;
(5) the active substance comprises a Si grain; and
(6) the active substance comprises a Si grain with a grain size of 2 nm to 10 nm.

6. The preparation method according to claim 4, **characterized in that** the preparation method comprises at least one of the following features (1) to (7):
(1) the buffer layer is capable of catalyzing the amorphous carbon material to form the carbon nano-material;
(2) the buffer layer is capable of catalyzing the amorphous carbon material to form in-situ the carbon nano-material;
(3) the buffer layer comprises at least one of LiF, NaF, and Li₃N;
(4) the buffer layer comprises at least one of Li₂O, Al₂O₃, MgO, TiO₂, ZnO, CuO, Ag₂O, and ZrO₂;
(5) the buffer layer has a thickness of 0.01 µm to 2 µm;
(6) the buffer layer comprises at least one of LiF, Li₂O, Li₃N, Al₂O₃, TiO₂, ZnO, and ZrO₂; and
(7) a manner of forming a buffer layer on surface of an active substance is liquid phase coating.

7. The preparation method according to claim 6, **characterized in that** the preparation method comprises at least one of the following features (1) to (6):
(1) a step of forming a buffer layer on surface of an active substance to obtain a solid composite comprises: mixing a buffer layer material and the active substance in a solvent to prepare a mixed slurry, and subjecting the mixed slurry to a solid-liquid separation treatment to obtain the solid composite;
(2) the buffer layer material in the mixed slurry has a particle size of 1 nm to 1 µm;
(3) the solvent comprises at least one of water and ethanol;
(4) the buffer layer material accounts for 0.05% to 0.2% by mass of the mixed slurry;
(5) the active substance accounts for 2% to 20% by mass of the mixed slurry; and
(6) the solid-liquid separation treatment comprises at least one of suction filtration process, centrifugation process, and spray drying process.

8. The preparation method according to claim 6, **characterized in that** the preparation method comprises at least one of the following features (1) to (5):
(1) a step of forming a buffer layer on surface of an active substance to obtain a solid composite comprises: mixing a precursor material of the buffer layer in a solvent to prepare a dispersion containing a buffer layer material; and adding the active substance to the dispersion for mixing, and subjecting to a solid-liquid separation treatment to obtain the solid composite;
(2) the precursor material of the buffer layer comprises a lithium source and a fluorine source;
(3) the precursor material of the buffer layer comprises a lithium source and a fluorine source, wherein the lithium source comprises at least one of lithium nitrate, lithium acetate, lithium carbonate, and lithium oxalate;
(4) the precursor material of the buffer layer comprises a lithium source and a fluorine source, wherein the fluorine source comprises at least one of ammonium fluoride, sodium fluoride, and calcium fluoride; and
(5) the precursor material of the buffer layer comprises a lithium source and a fluorine source, wherein the lithium source accounts for 0.01% to 0.5% by mass of the dispersion, and the fluorine source accounts for 0.01% to 0.5% by mass of the dispersion.

9. The preparation method according to claim 4, **characterized in that** the preparation method comprises at least one of the following features (1) to (4):
(1) the method further comprises: pre-heating the solid composite, and subjecting to a carbon coating treatment;
(2) the method further comprises: pre-heating the solid composite with a pre-heated protective atmosphere, and subjecting to a carbon coating treatment;
(3) the method further comprises: pre-heating the solid composite with a pre-heated protective atmosphere, and subjecting to a carbon coating treatment, wherein the protective atmosphere has a pre-heated temperature of 100°C to 300°C; and
(4) the method further comprises: pre-heating the solid composite with a pre-heated protective atmosphere, and subjecting to a carbon coating treatment, wherein the protective atmosphere has a temperature rise rate of 1°C/min to 50°C/min.

10. The preparation method according to any one of claims 4 to 9, **characterized in that** the preparation method comprises at least one of the following features (1) to (4):
(1) the carbon coating treatment comprises at least one of solid-phase carbon coating process, liquid-phase carbon coating process, and gas-phase carbon coating process;
(2) the carbon coating treatment comprises: mixing the solid composite with a carbon source, and making a pyrolysis of the carbon source to form the carbon layer on particle surface of the solid composite;
(3) after subjecting the solid composite to a carbon coating treatment, the method further comprises: subjecting the solid composite after carbon coating treatment to a heat treatment; and
(4) the protective atmosphere comprises at least one of nitrogen, argon, helium, neon, krypton, and xenon.

11. The preparation method according to claim 10, **characterized in that** the preparation method comprises at least one of the following features (1) to (14):
(1) the carbon source comprises a gas-phase carbon source;
(2) the carbon source comprises a gas-phase carbon source, wherein the gas-phase carbon source comprises a gas-phase hydrocarbon carbon source;
(3) the carbon source comprises a gas-phase carbon source, wherein the gas-phase carbon source comprises at least one of methane, ethane, propane, ethylene, propylene, acetylene, propyne, acetone, and benzene;
(4) the carbon source comprises a liquid-phase carbon source;
(5) the carbon source comprises a liquid-phase carbon source, wherein the liquid-phase carbon source comprises a liquid-phase organic carbon source;
(6) the carbon source comprises a liquid-phase carbon source, wherein the liquid-phase carbon source comprises at least one of n-hexane, toluene, benzene, xylene, methanol, ethanol, propanol, butanol, pentanol, acetone, butanone, 2-pentanone, methyl acetate, ethyl acetate, propyl acetate, butyl acetate, and amyl acetate;
(7) the carbon source comprises a solid-phase carbon source;
(8) the carbon source comprises a solid-phase carbon source, wherein the solid-phase carbon source comprises a solid-phase organic carbon source;
(9) the carbon source comprises a solid-phase carbon source, wherein the solid-phase carbon source comprises at least one of citric acid, glucose, pitch, phenolic resin, and furfural resin;
(10) the pyrolysis has a temperature of 600°C to 1200°C;
(11) the pyrolysis has a temperature rise rate of 0.1°C/min to 10°C/min;
(12) the heat treatment has a temperature of 600°C to 1200°C;
(13) the heat treatment has a temperature rise rate of 1°C/min to 5°C/min; and
(14) the heat treatment has a duration of 1 h to 48 h.

12. The preparation method according to any one of claims 4 to 9, **characterized in that** the active substance comprises a SiOₓ material, wherein 0<x<2; before forming the buffer layer on surface of the active substance, the method further comprises:
subjecting the SiOₓ material to a thermal disproportionation treatment.

13. The preparation method according to claim 12, **characterized in that** the preparation method comprises at least one of the following features (1) to (3):
(1) the thermal disproportionation treatment has a temperature of 800°C to 1400°C;
(2) the thermal disproportionation treatment has a temperature rise rate of 1°C/min to 5°C/min; and
(3) the thermal disproportionation treatment has a duration of 2 h to 50 h.

14. A lithium ion battery, **characterized in that** the lithium ion battery comprises the anode material according to any one of claims 1 to 3, or the anode material prepared by the preparation method of the anode material according to any one of claims 4 to 13.

15. A rechargeable electrical product, **characterized in that** the rechargeable electrical product comprises the lithium ion battery according to claim 14.
